(19) Europäisches Patentamt / European Patent Office / Office européen des brevets

(11) **EP 4 580 141 A1**

(12) **EUROPEAN PATENT APPLICATION**
published in accordance with Art. 153(4) EPC

(43) Date of publication:
**02.07.2025 Bulletin 2025/27**

(21) Application number: **22956928.0**

(22) Date of filing: **31.08.2022**

(51) International Patent Classification (IPC):
*H04L 27/38* (2006.01)    *H04L 5/00* (2006.01)
*H04B 7/024* (2017.01)    *H04W 4/00* (2018.01)

(52) Cooperative Patent Classification (CPC):
**H04B 7/024; H04L 5/00; H04L 27/38; H04W 4/00**

(86) International application number:
**PCT/CN2022/116389**

(87) International publication number:
**WO 2024/045102 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **BI, Xiaoyan
  Shenzhen, Guangdong 518129 (CN)**
• **JIANG, Chenglong
  Shenzhen, Guangdong 518129 (CN)**
• **LIU, Lei
  Shenzhen, Guangdong 518129 (CN)**
• **LIU, Yong
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND DEVICE**

(57)    This application provides a communication method and apparatus, and relates to the field of communication, to improve demodulation performance of a terminal. In the method, the terminal estimates noise by using a DMRS whose transmit power is zero, and estimates a channel by using a DMRS whose transmit power is not zero, so that the noise can be decoupled from the channel, to avoid a case in which a channel estimation error affects accuracy of noise estimation, and improve demodulation performance of the terminal.

FIG. 3

**Description**

**TECHNICAL FIELD**

This application relates to the field of communication, and in particular, to a communication method and apparatus.

**BACKGROUND**

In a 5th generation (5th generation, 5G) mobile communication system or a future communication system, a multiple-input multiple-output (multiple-input multiple-output, MIMO) technology, as a key technology, may use a resource in a spatial dimension, to implement multiple increase in a capacity and spectral efficiency of a system without increasing a bandwidth of the system. For example, a transmitter may carry a plurality of channels on a same time-frequency resource by using the resource in the spatial dimension, and then send the plurality of channels to a receiver. For the receiver, the receiver needs to first estimate each channel on the time-frequency resource, and then estimate noise on the time-frequency resource based on an estimation result of the plurality of channels, to implement signal demodulation.

However, if there is an error in estimation of the plurality of channels, the error also affects accuracy of noise estimation, consequently affecting demodulation performance of the receiver.

**SUMMARY**

Embodiments of this application provide a communication method and apparatus, to improve demodulation performance of a terminal.

To achieve the foregoing objective, the following technical solutions are used in this application.

According to a first aspect, a communication method is provided. The method includes: A terminal receives a data signal and a plurality of demodulation reference signals DMRSs corresponding to the data signal, where the plurality of DMRSs include a DMRS whose transmit power is zero and a DMRS whose transmit power is not zero; and the terminal determines, based on the DMRS whose transmit power is zero, noise corresponding to the data signal, and determines, based on the DMRS whose transmit power is not zero, a channel corresponding to the data signal, to demodulate the data signal based on the noise corresponding to the data signal and the channel corresponding to the data signal.

Based on the method according to the first aspect, the noise is estimated by using the DMRS whose transmit power is zero, and the channel is estimated by using the DMRS whose transmit power is not zero, so that the noise can be decoupled from the channel, to avoid a case in which a channel estimation error affects accuracy of noise estimation, and improve demodulation performance of the terminal.

In a possible design solution, the DMRS whose transmit power is zero is independently carried on a corresponding resource; and that the terminal determines, based on the DMRS whose transmit power is zero, noise corresponding to the data signal, and determines, based on the DMRS whose transmit power is not zero, a channel corresponding to the data signal includes: The terminal may determine, based on the DMRS whose transmit power is zero, the noise corresponding to the data signal, to implement quick noise estimation; and the terminal may further determine, based on the noise corresponding to the data signal and the DMRS whose transmit power is not zero, the channel corresponding to the data signal.

Optionally, the channel corresponding to the data signal includes a plurality of channels carried on a same resource, and that the terminal determines, based on the noise corresponding to the data signal and the DMRS whose transmit power is not zero, the channel corresponding to the data signal includes: The terminal determines, based on the noise corresponding to the data signal and the DMRS whose transmit power is not zero, a target channel that is used for carrying the data signal in the plurality of channels and another channel that causes interference to the target channel in the plurality of channels, where the another channel is used for carrying another signal different from the data signal. For example, the interference caused by the another channel to the target channel is greater than a preset threshold. In other words, if only a part of the channels are estimated, the noise cannot be determined by using an elimination method. However, when the noise is decoupled from the channel, the terminal may estimate only the part of the channels, for example, a strong interference channel that affects demodulation, without affecting signal demodulation, to further reduce a computation amount and complexity of channel estimation.

In a possible design solution, at least a part of DMRSs whose transmit powers are not zero are carried on a same resource as the DMRS whose transmit power is zero; and that the terminal determines, based on the DMRS whose transmit power is zero, noise corresponding to the data signal, and determines, based on the DMRS whose transmit power is not zero, a channel corresponding to the data signal includes: The terminal determines, based on the DMRS whose transmit power is not zero, the channel corresponding to the data signal; and determines, based on the DMRS whose transmit power is zero and the channel corresponding to the data signal, the noise corresponding to the data signal.

It can be learned that, when a resource originally needs to carry a plurality of DMRSs whose transmit powers are not zero, DMRSs whose transmit powers are zero are defined, so that a part of DMRSs in the DMRSs whose transmit powers are not zero may be replaced with the DMRSs whose transmit powers are zero, to reduce a quantity of multiplexing layers of the DMRSs whose transmit powers are not zero on the same resource, thereby reducing a quantity of estimated channels, and further reducing the computation amount and complexity of channel estimation. In addition, because the quantity of estimated channels is reduced, error accumulation of channel estimation can be reduced, thereby improving accuracy of noise estimation.

Optionally, the channel corresponding to the data signal includes a plurality of channels carried on a same resource, and that the terminal determines, based on the DMRS whose transmit power is not zero, the channel corresponding to the data signal includes: The terminal determines, based on the DMRS whose transmit power is not zero, a target channel that is used for carrying the data signal in the plurality of channels and another channel different from the target channel in the plurality of channels, where the another channel is used for carrying another signal different from the data signal, to implement comprehensive channel estimation and improve demodulation performance of the terminal.

In a possible design solution, before a terminal receives a data signal and a plurality of DMRSs corresponding to the data signal, the method further includes: The terminal receives indication information, where the indication information indicates time-frequency positions of the plurality of DMRSs; and correspondingly, that a terminal receives a plurality of DMRSs includes: The terminal accurately receives the plurality of DMRSs based on the indication information.

Optionally, the indication information indicates a DMRS pattern that needs to be used by the terminal, the DMRS pattern indicates time-frequency positions of DMRSs in the DMRS pattern, and the DMRSs in the DMRS pattern include the DMRS whose transmit power is zero and the DMRS whose transmit power is not zero.

It may be understood that, because a conventional DMRS pattern usually indicates only the DMRS whose transmit power is not zero, a DMRS pattern including the DMRS whose transmit power is zero and the DMRS whose transmit power is not zero may be understood as a newly defined DMRS pattern. In other words, if the DMRS whose transmit power is zero needs to be indicated, this may be implemented by indicating the newly defined DMRS pattern; or if the DMRS whose transmit power is not zero needs to be indicated, this may be implemented by indicating the conventional DMRS pattern, so that the DMRS whose transmit power is zero and the DMRS whose transmit power is zero can be independently indicated, to implement decoupling of DMRS indication. In this way, the DMRS indication can be more flexible.

Optionally, the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero. Optionally, a conventional DMRS pattern may be multiplexed, and a DMRS indicated in the conventional DMRS pattern is indicated as the DMRS whose transmit power is zero, to reduce implementation difficulty.

Optionally, the indication information indicates a DMRS pattern that needs to be used by the terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource. In this way, it can be implemented that the DMRS whose transmit power is not zero and the DMRS whose transmit power is zero can be independently indicated, and indication of the DMRS can be more flexible.

It may be understood that the indication information may indicate an index of the DMRS pattern, or may include the DMRS pattern. This is not limited.

Optionally, the indication information is carried in one or more of the following: a radio resource control RRC message, a MAC-CE medium access control element message, or a downlink scheduling control DCI message, to implement multiplexing of existing signaling and reduce implementation difficulty.

According to a second aspect, a communication method is provided. The method includes: A network apparatus determines a data signal and a plurality of demodulation reference signals DMRSs corresponding to the data signal, and sends the data signal and the plurality of DMRSs. The plurality of DMRSs include a DMRS whose transmit power is zero and a DMRS whose transmit power is not zero, the DMRS whose transmit power is zero is used for determining noise corresponding to the data signal, the DMRS whose transmit power is not zero is used for determining a channel corresponding to the data signal, and the noise corresponding to the data signal and the channel corresponding to the data signal are used for demodulating the data signal.

In a possible design solution, before that a network apparatus sends the data signal and the plurality of DMRSs, the method according to the second aspect further includes: The network apparatus sends indication information, where the indication information indicates time-frequency positions of the plurality of DMRSs.

Optionally, the indication information indicates a DMRS pattern that needs to be used by a terminal, the DMRS pattern indicates time-frequency positions of DMRSs in the DMRS pattern, and the DMRSs in the DMRS pattern include the DMRS whose transmit power is zero and the DMRS whose transmit power is not zero.

Further, the method according to the second aspect may further include: The network apparatus determines the DMRS pattern.

Optionally, the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Further, the method according to the second aspect may further include: The network apparatus determines the DMRS pattern, and determines that the designated DMRS in the DMRS pattern is the DMRS whose transmit power is zero.

Optionally, the indication information indicates a DMRS pattern that needs to be used by a terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Further, the method according to the second aspect may further include: The network apparatus determines the DMRS pattern, and determines the time-frequency position of the DMRS whose transmit power is zero.

Further, the DMRS whose transmit power is zero and the data signal are in a same bandwidth, to ensure accuracy of noise estimation, thereby ensuring correct demodulation of data.

Optionally, the indication information is carried in one or more of the following: a radio resource control RRC message, a MAC-CE medium access control element message, or a downlink scheduling control DCI message.

In addition, for technical effects of the communication method according to the second aspect, refer to technical effects of the communication method according to the first aspect. Details are not described herein again.

According to a third aspect, a communication method is provided. The method includes: A network apparatus determines a data signal and a plurality of demodulation reference signals DMRSs corresponding to the data signal, and sends the data signal and the plurality of DMRSs. The plurality of DMRSs include a DMRS whose transmit power is zero and a DMRS whose transmit power is not zero. A terminal receives the data signal and the plurality of DMRSs, determines, based on the DMRS whose transmit power is zero, noise corresponding to the data signal, and determines, based on the DMRS whose transmit power is not zero, a channel corresponding to the data signal, to demodulate the data signal based on the noise corresponding to the data signal and the channel corresponding to the data signal.

In a possible design solution, the DMRS whose transmit power is zero is independently carried on a corresponding resource; and that a terminal determines, based on the DMRS whose transmit power is zero, noise corresponding to the data signal, and determines, based on the DMRS whose transmit power is not zero, a channel corresponding to the data signal includes: The terminal determines, based on the DMRS whose transmit power is zero, the noise corresponding to the data signal, and determines, based on the noise corresponding to the data signal and the DMRS whose transmit power is not zero, the channel corresponding to the data signal.

Optionally, the channel corresponding to the data signal includes a plurality of channels carried on a same resource, and that the terminal determines, based on the noise corresponding to the data signal and the DMRS whose transmit power is not zero, the channel corresponding to the data signal includes: The terminal determines, based on the noise corresponding to the data signal and the DMRS whose transmit power is not zero, a target channel that is used for carrying the data signal in the plurality of channels and another channel that causes interference to the target channel in the plurality of channels, where the another channel is used for carrying another signal different from the data signal.

Further, the interference caused by the another channel to the target channel is greater than a preset threshold.

In a possible design solution, at least a part of DMRSs whose transmit powers are not zero are carried on a same resource as the DMRS whose transmit power is zero; and that a terminal determines, based on the DMRS whose transmit power is zero, noise corresponding to the data signal, and determines, based on the DMRS whose transmit power is not zero, a channel corresponding to the data signal includes: The terminal determines, based on the DMRS whose transmit power is not zero, the channel corresponding to the data signal; and determines, based on the DMRS whose transmit power is zero and the channel corresponding to the data signal, the noise corresponding to the data signal.

Optionally, the channel corresponding to the data signal includes a plurality of channels carried on a same resource, and that the terminal determines, based on the DMRS whose transmit power is not zero, the channel corresponding to the data signal includes: The terminal determines, based on the DMRS whose transmit power is not zero, a target channel that is used for carrying the data signal in the plurality of channels and another channel different from the target channel in the plurality of channels, where the another channel is used for carrying another signal different from the data signal.

In a possible design solution, before that a network apparatus sends the data signal and the plurality of DMRSs, and a terminal receives the data signal and the plurality of DMRSs, the method according to the third aspect may further include: The network apparatus sends indication information, and the terminal receives the indication information, where the indication information indicates time-frequency positions of the plurality of DMRSs; and correspondingly, that a terminal receives a plurality of DMRSs includes: The terminal receives the plurality of DMRSs based on the indication information.

Optionally, the indication information indicates a DMRS pattern that needs to be used by the terminal, the DMRS pattern indicates time-frequency positions of DMRSs in the DMRS pattern, and the DMRSs in the DMRS pattern include the DMRS whose transmit power is zero and the DMRS whose transmit power is not zero.

Further, the method according to the third aspect may further include: The network apparatus determines the DMRS pattern.

Optionally, the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Further, the method according to the third aspect may further include: The network apparatus determines the DMRS pattern, and determines that the designated DMRS in the DMRS pattern is the DMRS whose transmit power is zero.

Optionally, the indication information indicates a DMRS pattern that needs to be used by the terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Further, the method according to the third aspect may further include: The network apparatus determines the DMRS pattern, and determines the time-frequency position of the DMRS whose transmit power is zero.

Further, the DMRS whose transmit power is zero and the data signal are in a same bandwidth.

In a possible design solution, the indication information is carried in one or more of the following: a radio resource control RRC message, a MAC-CE medium access control element message, or a downlink scheduling control DCI message.

In addition, for technical effects of the communication method according to the third aspect, refer to technical effects of the communication methods according to the first aspect and the second aspect. Details are not described herein again.

According to a fourth aspect, a communication apparatus is provided. The apparatus includes a transceiver module and a processing module, where the transceiver module is configured to receive a data signal and a plurality of demodulation reference signals DMRSs corresponding to the data signal, where the plurality of DMRSs include a DMRS whose transmit power is zero and a DMRS whose transmit power is not zero; the processing module is configured to determine, based on the DMRS whose transmit power is zero, noise corresponding to the data signal, and determine, based on the DMRS whose transmit power is not zero, a channel corresponding to the data signal; and the processing module is further configured to demodulate the data signal based on the noise corresponding to the data signal and the channel corresponding to the data signal.

In a possible design solution, the DMRS whose transmit power is zero is independently carried on a corresponding resource; and the processing module is further configured to determine, based on the DMRS whose transmit power is zero, the noise corresponding to the data signal, and determine, based on the noise corresponding to the data signal and the DMRS whose transmit power is not zero, the channel corresponding to the data signal.

Optionally, the channel corresponding to the data signal includes a plurality of channels carried on a same resource, and the processing module is further configured to determine, based on the noise corresponding to the data signal and the DMRS whose transmit power is not zero, a target channel that is used for carrying the data signal in the plurality of channels and another channel that causes interference to the target channel in the plurality of channels, where the another channel is used for carrying another signal different from the data signal.

Further, the interference caused by the another channel to the target channel is greater than a preset threshold.

In a possible design solution, at least a part of DMRSs whose transmit powers are not zero are carried on a same resource as the DMRS whose transmit power is zero; and the processing module is further configured to determine, based on the DMRS whose transmit power is not zero, the channel corresponding to the data signal, and determine, based on the DMRS whose transmit power is zero and the channel corresponding to the data signal, the noise corresponding to the data signal.

Optionally, the channel corresponding to the data signal includes a plurality of channels carried on a same resource, and the processing module is further configured to determine, based on the DMRS whose transmit power is not zero, a target channel that is used for carrying the data signal in the plurality of channels and another channel different from the target channel in the plurality of channels, where the another channel is used for carrying another signal different from the data signal.

In a possible design solution, the transceiver module is further configured to receive indication information before receiving the data signal and the plurality of DMRSs corresponding to the data signal, where the indication information indicates time-frequency positions of the plurality of DMRSs; and correspondingly, the transceiver module is further configured to receive the plurality of DMRSs based on the indication information.

Optionally, the indication information indicates a DMRS pattern that needs to be used by a terminal, the DMRS pattern indicates time-frequency positions of DMRSs in the DMRS pattern, and the DMRSs in the DMRS pattern include the DMRS whose transmit power is zero and the DMRS whose transmit power is not zero.

Optionally, the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Optionally, the indication information indicates a DMRS pattern that needs to be used by a terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Optionally, the indication information is carried in one or more of the following: a radio resource control RRC message, a MAC-CE medium access control element message, or a downlink scheduling control DCI message.

Optionally, the transceiver module may include a sending module and a receiving module, where the sending module is configured to implement a sending function of the communication apparatus according to the fourth aspect, and the receiving module is configured to implement a receiving function of the communication apparatus according to the fourth aspect.

Optionally, the transceiver module may be a transceiver, and the processing module may be a processor.

Optionally, the communication apparatus according to the fourth aspect may further include a storage module, and the storage module stores a program or instructions. When the processing module executes the program or the instructions, the communication apparatus is enabled to perform the communication method according to the first aspect.

It may be understood that the communication apparatus according to the fourth aspect may be a terminal, may be a chip (system) or another part or component that may be arranged in a terminal, or may be an apparatus including a terminal. This is not limited in this application. It may be understood that, if the communication apparatus is a chip (system) arranged in a device, the transceiver module may be an input/output interface such as an input/output circuit or a pin of the chip (system).

In addition, for technical effects of the communication apparatus according to the fourth aspect, refer to technical effects of the communication method according to the first aspect. Details are not described herein again.

According to a fifth aspect, a communication apparatus is provided. The apparatus includes a transceiver module and a processing module, where the processing module is configured to determine a data signal and a plurality of demodulation reference signals DMRSs corresponding to the data signal; and the transceiver module is configured to send the data signal and the plurality of DMRSs. The plurality of DMRSs include a DMRS whose transmit power is zero and a DMRS whose transmit power is not zero, the DMRS whose transmit power is zero is used for determining noise corresponding to the data signal, the DMRS whose transmit power is not zero is used for determining a channel corresponding to the data signal, and the noise corresponding to the data signal and the channel corresponding to the data signal are used for demodulating the data signal.

In a possible design solution, the transceiver module is further configured to send indication information before sending the data signal and the plurality of DMRSs, where the indication information indicates time-frequency positions of the plurality of DMRSs.

Optionally, the indication information indicates a DMRS pattern that needs to be used by a terminal, the DMRS pattern indicates time-frequency positions of DMRSs in the DMRS pattern, and the DMRSs in the DMRS pattern include the DMRS whose transmit power is zero and the DMRS whose transmit power is not zero.

Further, the processing module is further configured to determine the DMRS pattern.

Optionally, the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Further, the processing module is further configured to determine the DMRS pattern, and determine that the designated DMRS in the DMRS pattern is the DMRS whose transmit power is zero.

Optionally, the indication information indicates a DMRS pattern that needs to be used by a terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Further, the processing module is further configured to determine the DMRS pattern, and determine the time-frequency position of the DMRS whose transmit power is zero.

Further, the DMRS whose transmit power is zero and the data signal are in a same bandwidth.

Optionally, the indication information is carried in one or more of the following: a radio resource control RRC message, a MAC-CE medium access control element message, or a downlink scheduling control DCI message.

Optionally, the transceiver module may include a sending module and a receiving module, where the sending module is configured to implement a sending function of the communication apparatus according to the fifth aspect, and the receiving module is configured to implement a receiving function of the communication apparatus according to the fifth aspect.

Optionally, the transceiver module may be a transceiver, and the processing module may be a processor.

Optionally, the communication apparatus according to the fifth aspect may further include a storage module, and the storage module stores a program or instructions. When the processing module executes the program or the instructions, the communication apparatus is enabled to perform the communication method according to the second aspect.

It may be understood that the communication apparatus according to the fifth aspect may be a network apparatus, for example, a network device, may be a chip (system) or another part or component that may be arranged in a network apparatus, or may be an apparatus including a network apparatus. This is not limited in this application. It may be understood that, if the communication apparatus is a chip (system) arranged in a device, the transceiver module may be an input/output interface such as an input/output circuit or a pin of the chip (system).

In addition, for technical effects of the communication apparatus according to the fifth aspect, refer to technical effects of the communication method according to the second aspect. Details are not described herein again.

According to a sixth aspect, a communication apparatus is provided. The communication apparatus includes a processor, and the processor is configured to perform the communication method according to the first aspect or the second aspect.

In a possible design solution, the communication apparatus according to the sixth aspect may further include a transceiver. The transceiver may be a transceiver circuit or an interface circuit. The transceiver may be configured for communication between the communication apparatus according to the sixth aspect and another communication apparatus.

In a possible design solution, the communication apparatus according to the sixth aspect may further include a memory. The memory and the processor may be integrated together, or may be separately arranged. The memory may be configured to store a computer program and/or data related to the communication method according to the first aspect or the second aspect.

In this application, the communication apparatus according to the sixth aspect may be the terminal according to the first aspect or the network apparatus according to the second aspect, may be a chip (system) or another part or component that may be arranged in the terminal or the network apparatus, or may be an apparatus including the terminal or the network apparatus.

In addition, for technical effects of the communication apparatus according to the sixth aspect, refer to technical effects of the communication method according to the first aspect or the second aspect. Details are not described herein again.

According to a seventh aspect, a communication apparatus is provided. The communication apparatus includes a processor, the processor is coupled to a memory, and the processor is configured to execute a computer program stored in the memory, to enable the communication apparatus to perform the communication method according to the first aspect or the second aspect.

In a possible design solution, the communication apparatus according to the seventh aspect may further include a transceiver. The transceiver may be a transceiver circuit or an interface circuit. The transceiver may be configured for communication between the communication apparatus according to the seventh aspect and another communication apparatus.

In this application, the communication apparatus according to the seventh aspect may be the terminal according to the first aspect or the network apparatus according to the second aspect, may be a chip (system) or another part or component that may be arranged in the terminal or the network apparatus, or may be an apparatus including the terminal or the network apparatus.

In addition, for technical effects of the communication apparatus according to the seventh aspect, refer to technical effects of the communication method according to the first aspect or the second aspect. Details are not described herein again.

According to an eighth aspect, a communication apparatus is provided, including a processor and a memory, where the memory is configured to store a computer program, and when the processor executes the computer program, the communication apparatus is enabled to perform the communication method according to the first aspect or the second aspect.

In a possible design solution, the communication apparatus according to the eighth aspect may further include a transceiver. The transceiver may be a transceiver circuit or an interface circuit. The transceiver may be configured for communication between the communication apparatus according to the eighth aspect and another communication apparatus.

In this application, the communication apparatus according to the eighth aspect may be the terminal according to the first aspect or the network apparatus according to the second aspect, may be a chip (system) or another part or component that may be arranged in the terminal or the network apparatus, or may be an apparatus including the terminal or the network apparatus.

In addition, for technical effects of the communication apparatus according to the eighth aspect, refer to technical effects of the communication method according to the first aspect or the second aspect. Details are not described herein again.

According to a ninth aspect, a communication system is provided. The communication system includes a terminal configured to perform the method according to the first aspect and a network apparatus configured to perform the method according to the second aspect.

According to a tenth aspect, a computer-readable storage medium is provided, including a computer program or instructions. When the computer program or the instructions are run on a computer, the computer is enabled to perform the communication method according to the first aspect or the second aspect.

According to an eleventh aspect, a computer program product is provided, including a computer program or instructions. When the computer program or the instructions are run on a computer, the computer is enabled to perform the communication method according to the first aspect or the second aspect.

**BRIEF DESCRIPTION OF DRAWINGS**

FIG. 1 is a diagram 1 of an architecture of a communication system according to an embodiment of this application;
FIG. 2 is a diagram 2 of an architecture of a communication system according to an embodiment of this application;
FIG. 3 is a schematic flowchart of a communication method according to an embodiment of this application;
FIG. 4 is a diagram 1 of a DMRS pattern in a communication method according to an embodiment of this application;
FIG. 5 is a diagram 2 of a DMRS pattern in a communication method according to an embodiment of this application;
FIG. 6 is a diagram 3 of a DMRS pattern in a communication method according to an embodiment of this application;
FIG. 7 is a diagram 1 of a structure of a communication apparatus according to an embodiment of this application; and
FIG. 8 is a diagram 2 of a structure of a communication apparatus according to an embodiment of this application.

**DESCRIPTION OF EMBODIMENTS**

For ease of understanding, the following first describes technical terms involved in embodiments of this application.

1. Multiple-input multiple-output (multiple-input multiple-output, MIMO) system:
In a 5th generation (5th generation, 5G) mobile communication system, such as a new radio (new radio, NR) system or a future communication system, a MIMO system is mainly used for implementing a technical indicator of high-rate transmission. In the MIMO system, a resource in a spatial dimension may be used, to enable a signal to obtain an array gain, multiplexing and diversity gains, and an interference cancellation gain without increasing a bandwidth of the system, to implement multiple increase in a capacity and spectral efficiency of a communication system.

In the MIMO system, channel estimation needs to be performed on an uplink (up link) or a downlink (down link), to implement functions such as obtaining system synchronization, feeding back channel information, and receiving and sending data. Channel estimation is a process of reconstructing or recovering a received signal to compensate for signal distortion caused by channel fading and noise. In channel estimation, a benchmark signal predicted by a transmitter and a receiver may be used to track time domain and frequency domain changes of a channel, to implement reconstruction or recovery of the received signal. The benchmark signal may also be referred to as a pilot signal or a reference signal (reference signal, RS). For ease of understanding, the benchmark signal is described as the reference signal in the following. The reference signal has a known amplitude and a known phase, and is distributed on different resource elements (resource elements, REs) in time domain and frequency domain. Each transmit antenna (virtual antenna or physical antenna) in the MIMO system has an independent channel. Therefore, to implement channel measurement for a plurality of antennas, a plurality of reference signals, such as a channel state information-reference signal (channel state information-reference signal, CSI-RS), a sounding reference signal (sounding reference signal, SRS), and a demodulation reference signal (demodulation reference signal, DMRS), are defined in the NR system.

The CSI-RS is mainly used for downlink channel estimation corresponding to a physical antenna port. For example, the receiver (for example, a terminal) may perform channel estimation on each physical antenna port based on a CSI-RS sent by the transmitter (for example, a base station (base station, BS)), to feed back channel state information (channel state information, CSI) based on a channel estimation result. The CSI may include related information such as a channel quality indicator (channel quality indicator, CQI), a precoding indicator (precoding matrix indicator, PMI), a layer indicator (layer indicator, LI), and a rank indicator (rank indicator, RI), so that the BS implements reconstruction or precoding on a downlink channel. The SRS is mainly used for uplink channel estimation. For example, the BS may perform uplink channel estimation based on an SRS sent by the terminal, to perform functions such as frequency selection resource scheduling, power control, timing estimation, modulation/coding scheme order selection, and generation of downlink precoding in a time division duplex (time division duplex, TDD) system based on the channel estimation result. The DMRS is mainly used by the terminal to assist in demodulation of a physical downlink shared channel (physical downlink shared channel, PDSCH), or demodulation of downlink data.

2. DMRS:

A transmitted signal of a user $k$ may be denoted as $x_k \in \mathbb{C}^{Nlayer_k \times 1}$, where $Nlayer_k$ indicates that a quantity of scheduling layers of the user $k$ is N, and N is an integer greater than 1. A received signal of the user $k$ may be denoted as $y_k \in \mathbb{C}^{Nrx \times 1}$, where $Nrx$ is a quantity of receive antennas of the user $k$. For example, a MIMO equalization manner is minimum mean square error-interference rejection combining (minimum mean square error-interference rejection combining, MMSE-IRC). A relationship between the transmitted signal and the received signal may be represented using the following Formula 1 to Formula 3.

$$W_k^H \cdot y_k = \widehat{x}_k \approx x_k; (1)$$

$$W_k^H = \left(I_k + H_{eq,kk}^H \cdot R_{uu}^{-1} \cdot H_{eq,kk}\right)^{-1} H_{eq,kk}^H \cdot R_{uu}^{-1} \in \mathbb{C}^{Nlayer_k \times Nrx}; (2)$$

$$R_{uu} = \sum_{l \neq k} H_{eq,kl} \cdot H_{eq,kl}^H + \sigma_{N_k}^2 I_k \in \mathbb{C}^{Nrx \times Nrx}; (3)$$

In the foregoing Formula 1 to Formula 3, $W_k^H$ is a matrix of a channel equalization system, a superscript H represents a conjugate transposition operation, $\hat{x}_k$ is an equivalent value of a transmitted signal $x_k$, $R_{uu}$ is a covariance matrix of interference and noise, $I_k$ is an identity matrix, and $H_{eq,kk}^H \in \mathbb{C}^{Nlayer_k \times Nrx}$ is an equivalent channel matrix (including a useful signal) of the user $k$. $\sigma_{N_k}$ is noise of a channel. $H_{eq,kl} \in \mathbb{C}^{Nlayer_l \times Nrx}$ is an interference channel matrix (including an interfering signal) of a user $l$ for the user $k$, and may also be understood as interference caused by a transmitted signal of the user $l$ to the user $k$. $Nlayer_l$ indicates that a quantity of scheduling layers of the user $l$ is N. In a case of a plurality of antennas, there may also be a plurality of $H_{eq,kl} \in \mathbb{C}^{Nlayer_l \times Nrx}$, and more antennas indicate that more $H_{eq,kl}$ may also be configured.

After receiving the received signal, a receiver may estimate $W_k^H$ by using the DMRS, to implement signal demodulation and obtain the transmitted signal. To implement estimation of $W_k^H$, the receiver may estimate $R_{uu}$ and/or $H_{eq,kl}$ by using the DMRS. Currently, there are two estimation manners for $R_{uu}$, which are separately introduced below.

Manner 1: The receiver estimates $H_{eq,kl}$ by using the DMRS, to obtain $H_{eq,kl} \cdot H_{eq,kl}^H$. The receiver then estimates $\sigma_{N_k}^2$ by using $H_{eq,kl} \cdot H_{eq,kl}^H$, to obtain $R_{uu}$. However, there are usually a large quantity of $H_{eq,kl}$, and overheads required for estimating these $H_{eq,kl}$ are large, resulting in a high performance requirement for the receiver and poor device compatibility.

Manner 2: To reduce overheads of estimating $\boldsymbol{R_{uu}}$, the receiver may first estimate an equivalent value $\widehat{\boldsymbol{H}}^{\mathrm{H}}_{eq,kk}$ of $\boldsymbol{H}^{\mathrm{H}}_{eq,kk}$ by using the DMRS, and then estimates an equivalent value $\hat{\boldsymbol{R}}_{uu}$ of $\boldsymbol{R_{uu}}$ by using $\widehat{\boldsymbol{H}}^{\mathrm{H}}_{eq,kk}$. In this case, $\hat{\boldsymbol{R}}_{uu}$ may be represented using the following Formula 4.

$$\widehat{\boldsymbol{R}}_{uu} = \frac{1}{Npilot}\left(\boldsymbol{Y}_{k,pilot} - \widehat{\boldsymbol{H}}^{\mathrm{H}}_{eq,kk} \cdot \boldsymbol{X}_{k,pilot}\right) \cdot \left(\boldsymbol{Y}_{k,pilot} - \widehat{\boldsymbol{H}}^{\mathrm{H}}_{eq,kk} \cdot \boldsymbol{X}_{k,pilot}\right)^{\mathrm{H}} \approx \boldsymbol{R_{uu}}; (4)$$

In the foregoing Formula 4, *Npilot* indicates that a quantity of DMRSs is N, $\boldsymbol{Y}_{k,pilot}$ indicates a received DMRS sequence, and $\boldsymbol{X}_{k,pilot}$ indicates a sent DMRS sequence. However, $\hat{\boldsymbol{R}}_{uu}$ estimated in this manner has an interference coupling term. For example, $\boldsymbol{H}^{\mathrm{H}}_{eq,kl}$ includes $\boldsymbol{H}^{\mathrm{H}}_{eq,kl1}$ and $\boldsymbol{H}^{\mathrm{H}}_{eq,kl2}$. $\hat{\boldsymbol{R}}_{uu}$ obtained through estimation may be represented using the following Formula 5.

$$\widehat{\boldsymbol{R}}_{uu} = \boldsymbol{H}_{eq,kl1} \cdot \boldsymbol{H}^{\mathrm{H}}_{eq,kl1} + \boldsymbol{H}_{eq,kl2} \cdot \boldsymbol{H}^{\mathrm{H}}_{eq,kl2} + \boldsymbol{H}_{eq,kl1} \cdot \boldsymbol{H}^{\mathrm{H}}_{eq,kl2} + \boldsymbol{H}_{eq,kl2} \cdot \boldsymbol{H}^{\mathrm{H}}_{eq,kl1} + \sigma^2_{N_k}\boldsymbol{I}_k; (5)$$

In the foregoing Formula 5, $\boldsymbol{H}_{eq,kl1} \cdot \boldsymbol{H}^{\mathrm{H}}_{eq,kl2} + \boldsymbol{H}_{eq,kl2} \cdot \boldsymbol{H}^{\mathrm{H}}_{eq,kl1}$ is the interference coupling term, which causes a large error between $\hat{\boldsymbol{R}}_{uu}$ obtained through estimation and actual $\boldsymbol{R_{uu}}$. In other words, a large error exists in channel estimation, affecting demodulation performance of the receiver.

In conclusion, for two existing channel estimation manners, although channel estimation can be accurately implemented in the manner 1, complexity is excessively high; and although complexity of channel estimation can be reduced in the manner 2, the error of channel estimation is large, and accuracy is low. Therefore, complexity and accuracy of channel estimation cannot be simultaneously ensured in the foregoing two manners.

For the foregoing technical problem, embodiments of this application provide the following technical solutions, to simultaneously ensure overheads and accuracy of channel estimation.

The following describes the technical solutions of this application with reference to accompanying drawings.

The technical solutions in embodiments of this application are applicable to various communication systems, such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, 5G such as a new radio (new radio, NR) system, or a future communication system.

In this application, all aspects, embodiments, or features are presented using an example of a system that may include a plurality of devices, components, modules, and the like. It should be understood and appreciated that each system may include another device, component, module, and the like, and/or may not include all devices, components, modules, and the like discussed with reference to the accompanying drawings. In addition, a combination of the solutions may be used.

In addition, in embodiments of this application, terms such as "example" or "for example" are used to represent giving an example, an illustration, or a description. In this application, any embodiment or design solution described as an "example" should not be explained as being more preferred or having more advantages than another embodiment or design solution. Rather, the term "example" is used for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. Terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

It may be understood that, in this application, an "indication" may include a direct indication, an indirect indication, an explicit indication, or an implicit indication. When a piece of indication information is described for indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and another part of the to-be-indicated information is known or agreed in advance. For example, indication of specific information may alternatively be implemented by using an arrangement sequence of a plurality of pieces of information that is pre-agreed on (for example, stipulated in a protocol), to reduce indication overheads to some extent.

The to-be-indicated information may be sent together as a whole, or may be divided into a plurality of pieces of sub-information for separate sending. In addition, sending periodicities and/or sending occasions of the pieces of sub-information may be the same or may be different. A specific sending method is not limited in this application. The sending periodicities and/or the sending occasions of the pieces of sub-information may be predefined, for example, predefined according to a protocol, or may be configured by a transmitter device by sending configuration information to a receiver device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

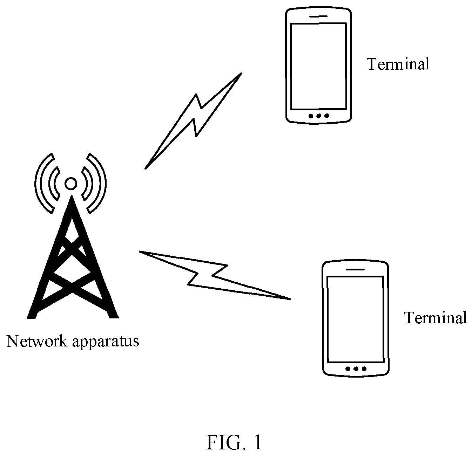

For ease of understanding embodiments of this application, a communication system applicable to embodiments of this application is first described in detail by using a communication system shown in FIG. 1 as an example. For example, FIG. 1 is a diagram 1 of an architecture of a communication system to which a communication method is applicable according to an embodiment of this application.

As shown in FIG. 1, the communication system mainly includes the following devices.

A terminal may be a terminal having receiving and sending functions, or may be a chip or a chip system that may be arranged in a terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

A network apparatus may be a network device, for example, an access network (access network, AN) device, or may be referred to as a radio access network device (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of (including a plurality of antenna panels) antenna panels of a base station in 5G, or may be a network node that forms a gNB, a transmission point (transmission and reception point, TRP, or transmission point, TP), or a transmission measurement function (transmission measurement function, TMF), such as a baseband unit (building baseband unit, BBU), a central unit (central unit, CU), or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, a 6G access network device such as a 6G base station. Alternatively, in the next-generation mobile communication system, the network apparatus may be named in other manners, and all the manners fall within the protection scope of embodiments of this application. This is not limited in this application.

It may be understood that FIG. 1 is merely a simplified diagram used as an example for ease of understanding. The communication system may further include another network apparatus and/or another terminal device not drawn in FIG. 1.

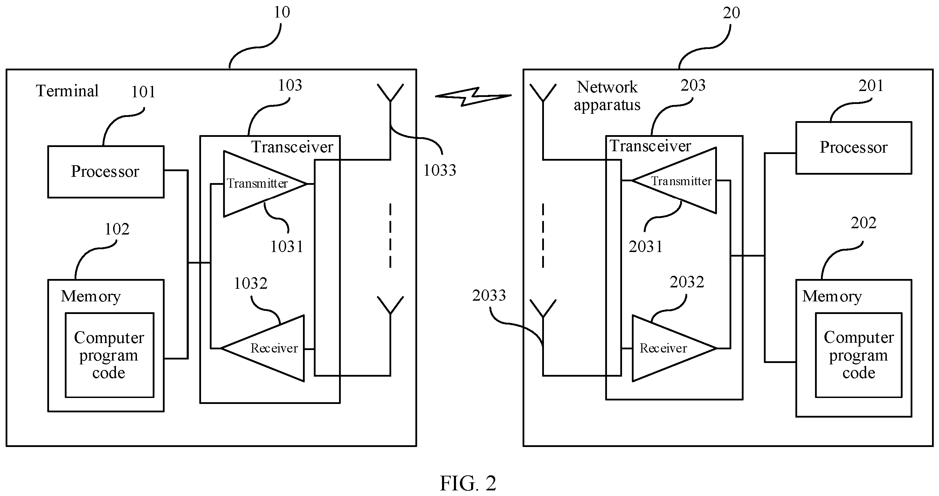

FIG. 2 is a diagram 2 of an architecture of a communication system to which a communication method is applicable according to an embodiment of this application. As shown in FIG. 2, communication between a network apparatus and a terminal in the communication system may alternatively be represented in another form. A terminal 10 includes a processor 101, a memory 102, and a transceiver 103. The transceiver 103 includes a transmitter 1031, a receiver 1032, and a plurality of antennas 1033 (antenna panels). A network apparatus 20 includes a processor 201, a memory 202, and a transceiver 203. The transceiver 203 includes a transmitter 2031, a receiver 2032, and at least one antenna 2033 (antenna panel). The transmitter 2031 may be configured to send a DMRS and data to the terminal 10 through the antenna 2033. Correspondingly, the receiver 1032 may be configured to receive the DMRS and the data through the antenna 1033, to implement data demodulation.

It may be understood that the DMRS may also be referred to as a DMRS port. In embodiments of this application, the DMRS and the DMRS port may also be interchangeably used. This is not limited.

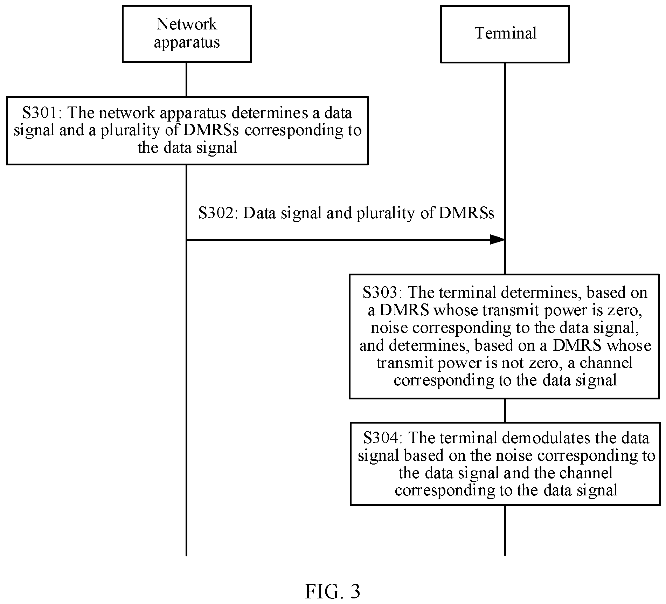

For ease of understanding, the following specifically describes a communication method provided in embodiment of this application with reference to FIG. 3.

For example, FIG. 3 is a schematic flowchart of a communication method according to an embodiment of this application. The method is applicable to communication between a network apparatus and a terminal in the foregoing communication system.

Specifically, as shown in FIG. 3, a procedure of the communication method is as follows.

S301: The network apparatus determines a data signal and a plurality of DMRSs corresponding to the data signal.

The data signal may include service data of a user, such as video service data and audio service data. This is not limited.

The plurality of DMRSs are mainly used by the terminal to demodulate the data signal. The plurality of DMRSs may include a DMRS whose transmit power is zero and a DMRS whose transmit power is not zero.

Specifically, the DMRS whose transmit power is zero may mean that the DMRS has no transmit power, or that the transmit power of the DMRS is very small and may be considered as approaching zero. The DMRS whose transmit power is zero may be a logical signal, or a signal at a logical layer. For example, because the DMRS whose transmit power is zero has no transmit power, the network apparatus actually does not send the DMRS whose transmit power is zero. Therefore, it may be considered that the DMRS is sent at the logical layer, that is, the DMRS is the signal at the logical layer. In this case, noise corresponding to the data signal is usually superimposed on the DMRS whose transmit power is zero. Therefore, in a data signal demodulation process, the DMRS whose transmit power is zero may be used for determining the noise corresponding to the data signal. For a specific implementation principle, refer to the following related descriptions of S303. Details are not described again.

It may be understood that a name of the DMRS whose transmit power is zero is an example, and is not used as a limitation. For example, the DMRS whose transmit power is zero may alternatively be replaced with a zero-power (zero-power, ZP) DMRS, or a ZP DMRS port, or may have any other possible name. This is not limited in this embodiment of this application.

The DMRS whose transmit power is not zero may be a physical signal, or a signal at a physical layer, for example, a conventional DMRS. For example, the network apparatus may actually send the DMRS based on the transmit power of the DMRS whose transmit power is not zero. Therefore, it may be considered that the DMRS is sent at the physical layer, that is, the DMRS is the signal at the physical layer. In this case, a channel corresponding to the data signal, for example, a downlink channel, specifically, such as a physical downlink shared channel (physical downlink shared channel, PDSCH) or any other possible channel is usually superimposed on the DMRS whose transmit power is not zero. Therefore, in a data demodulation process, the DMRS whose transmit power is not zero may be used for estimating the channel corresponding to the data signal.

There may be a plurality of DMRSs whose transmit powers are not zero, and each DMRS whose transmit power is not zero corresponds to one signal. In a MIMO system, after being distinguished in a space domain dimension, these signals (including the data signal) may be carried on a same resource, such as an RE, an RE group, a resource block (resource block, RB), or an RB group. Each signal is transmitted through a channel corresponding to the signal. The channel corresponding to the data signal may be denoted as a target channel, that is, the foregoing equivalent channel matrix, and a channel corresponding to another signal different from the data signal in a plurality of signals is denoted as another channel, that is, the foregoing interference channel matrix. To implement demodulation of the data signal, the terminal needs to estimate the target channel by using a DMRS whose transmit power is not zero and that corresponds to the data signal. For a specific implementation principle, refer to the following related descriptions of S303. Details are not described again. In this case, because a plurality of channels are carried on a same resource, the another channel causes interference to the target channel. Therefore, the terminal further needs to estimate the another channel by using a DMRS whose transmit power is not zero and that corresponds to the another signal. For a specific implementation principle, refer to the following related descriptions of S303. Details are not described again. In other words, to implement the demodulation of the data signal, the terminal needs to estimate the target channel in the plurality of channels, and also needs to estimate the another channel in the plurality of channels. Therefore, the channel corresponding to the data signal may also be understood as the foregoing plurality of channels corresponding to the data signal.

It may be understood that a name of the DMRS whose transmit power is not zero is an example, and is not used as a limitation. For example, the DMRS whose transmit power is not zero may alternatively be replaced with a non-zero-power (non-zero-power, NZP) DMRS, or an NZP DMRS port, or may have any other possible name. This is not limited in this embodiment of this application.

For ease of understanding, the following describes the foregoing plurality of DMRSs by using an example.

For example, the DMRS whose transmit power is zero is denoted as the ZP DMRS. The plurality of signals include a signal #0 to a signal #5. The plurality of channels include a channel #0 to a channel #5. The plurality of DMRSs whose transmit powers are not zero include a DMRS #0 to a DMRS #5. Correspondences between the plurality of signals, the plurality of channels, and the plurality of DMRSs whose transmit powers are not zero include: the signal #0-the channel #0-the DMRS #0, a signal #1-a channel #1-a DMRS #1, a signal #2-a channel #2-a DMRS #2, a signal #3-a channel #3-a DMRS #3, a signal #4-a channel #4-a DMRS #4, and the signal #5-the channel #5-the DMRS #5. To demodulate the signal #0, the terminal needs to estimate noise of the channel #0 by using the ZP DMRS, to estimate the channel #0 by using the DMRS #0, to estimate the channel #1 by using the DMRS #1, to estimate the channel #2 by using the DMRS #2, to estimate the channel #3 by using the DMRS #3, to estimate the channel #4 by using the DMRS #4, and to estimate the channel #5 by using the DMRS #5.

In this embodiment of this application, that the network apparatus determines a plurality of DMRSs may be: The network apparatus determines time-frequency positions of the plurality of DMRSs, and carries the plurality of DMRSs at the respective corresponding time-frequency positions.

In a first implementation, the network apparatus may determine a DMRS pattern, the DMRS pattern may indicate time-frequency positions of DMRSs in the DMRS pattern, and the DMRSs in the DMRS pattern may include the plurality of DMRSs, that is, include the DMRS whose transmit power is zero and the DMRS whose transmit power is not zero. In the DMRS pattern, the DMRS whose transmit power is zero may be independently carried on a corresponding resource, or the DMRS whose transmit power is zero may be carried on a same resource as at least a part of DMRSs whose transmit powers are not zero. On this basis, time-frequency positions of resources on which the plurality of DMRSs are respectively located are the respective time-frequency positions of the plurality of DMRSs. In this way, the network apparatus can carry the plurality of DMRSs at the respective time-frequency positions of the DMRS pattern indicated by the DMRS pattern.

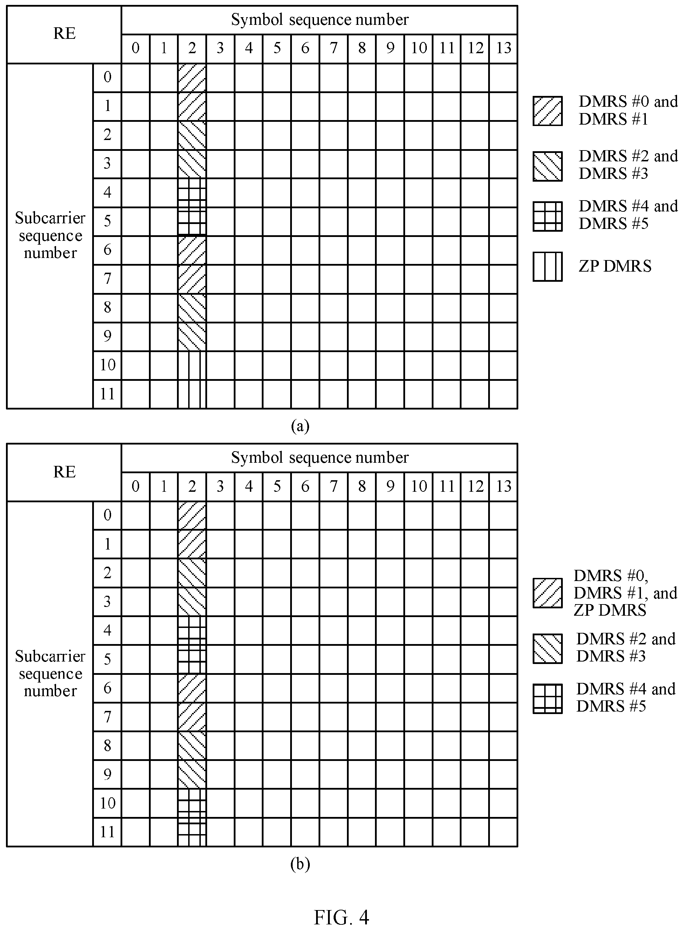

Still refer to the foregoing example. As shown in (a) in FIG. 4, the DMRSs in the DMRS pattern include the ZP DMRS, the DMRS #0, the DMRS #1, the DMRS #2, the DMRS #3, the DMRS #4, and the DMRS #5, and these DMRSs are independently carried on respective corresponding resources. In this case, a time-frequency position of the ZP DMRS is an RE (2, 10-11), to indicate that a time domain position of the RE is a symbol 2, and a frequency domain position of the RE is a subcarrier 10 and a subcarrier 11. This is deduced by analogy in the following. Details are not described again. Time-frequency positions of the DMRS #0 and the DMRS #1 are an RE (2, 0-1) and an RE (2, 6-7), time-frequency positions of the DMRS #2 and the DMRS #3 are an RE (2, 2-3) and an RE (2, 8-9), and time-frequency positions of the DMRS #4 and the DMRS #5 are an RE (2, 4-5).

Alternatively, as shown in (b) in FIG. 4, the DMRSs in the DMRS pattern include the ZP DMRS, the DMRS #0, the DMRS #1, the DMRS #2, the DMRS #3, the DMRS #4, and the DMRS #5. The ZP DMRS are carried on a same resource (an identical resource) as the DMRS #0 and the DMRS #1, and other DMRSs are independently carried on respective corresponding resources. In this case, time-frequency positions of the ZP DMRSs are an RE (2, 0-1) and an RE (2, 6-7), time-frequency positions of the DMRS #0 and the DMRS #1 are the RE (2, 0-1) and the RE (2, 6-7), time-frequency positions of the DMRS #2 and the DMRS #3 are an RE (2, 2-3) and an RE (2,8-9), and time-frequency positions of the DMRS #4 and the DMRS #5 are an RE (2, 4-5) and an RE (2, 10-11).

In a second implementation, the network apparatus may determine a DMRS pattern, and the DMRS pattern may indicate time-frequency positions of DMRSs in the DMRS pattern. The network apparatus may determine that a designated DMRS in the DMRS pattern is the DMRS whose transmit power is zero. For example, the network apparatus may determine, based on interference between channels carrying data streams and a mapping relationship between the channel and the DMRS in the DMRS pattern, that the designated DMRS in the DMRS pattern is the DMRS whose transmit power is zero. Alternatively, the network apparatus may determine the DMRS whose transmit power is zero in any other possible manner. Specific implementation is not limited. A DMRS other than the designated DMRS in the DMRS pattern is the DMRS whose transmit power is not zero. In a similar way as the foregoing implementation, in the DMRS pattern, the DMRS whose transmit power is zero may be independently carried on a corresponding resource, or the DMRS whose transmit power is zero may be carried on a same resource as at least a part of DMRSs whose transmit powers are not zero. On this basis, time-frequency positions of resources on which the plurality of DMRSs are respectively located are the respective time-frequency positions of the plurality of DMRSs. In this way, the network apparatus can carry the plurality of DMRSs at the respective time-frequency positions of the DMRS pattern indicated by the DMRS pattern.

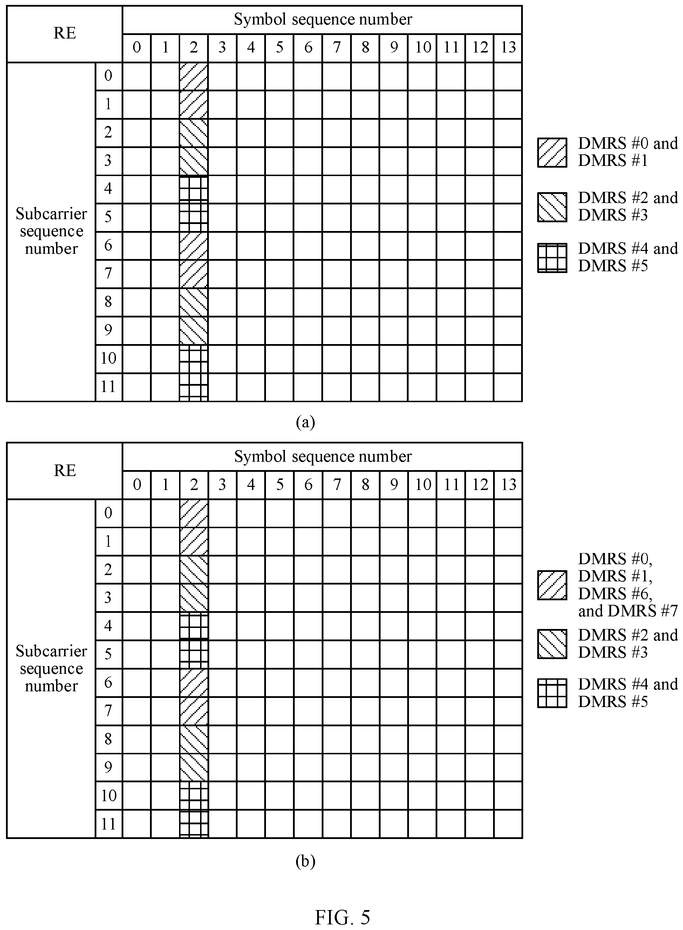

Still refer to the foregoing example. As shown in (a) in FIG. 5, the DMRSs in the DMRS pattern include the DMRS #0, the DMRS #1, the DMRS #2, the DMRS #3, the DMRS #4, and the DMRS #5, and these DMRSs are independently carried on respective corresponding resources. The network apparatus may designate the DMRS #4 and the DMRS #5 as ZP DMRSs, and the remaining DMRS #0, DMRS #1, DMRS #2, and DMRS #3 as NZP DMRSs. In this case, time-frequency positions of the ZP DMRSs are an RE (2, 4-5) and an RE (2, 10-11), time-frequency positions of the DMRS #0 and the DMRS #1 are an RE (2, 0-1) and an RE (2, 6-7), and time-frequency positions of the DMRS #2 and the DMRS #3 are an RE (2, 2-3), and an RE (2, 8-9).

Alternatively, as shown in (b) in FIG. 5, the DMRSs in the DMRS pattern include the DMRS #0, the DMRS #1, the DMRS #2, the DMRS #3, the DMRS #4, the DMRS #5, a DMRS #6, and a DMRS #7. The DMRS #0 and the DMRS #1 are carried on a same resource as the DMRS #6 and the DMRS #7, and the remaining DMRSs are independently carried on respective corresponding resources. The network apparatus may designate the DMRS #6 and the DMRS #7 as ZP DMRSs, and the remaining DMRS #0, DMRS #1, DMRS #2, DMRS #3, DMRS #4, and DMRS #5 as NZP DMRSs. In this case, time-frequency positions of the ZP DMRSs are an RE (2, 0-1) and an RE (2, 6-7), time-frequency positions of the DMRS #0 and the DMRS #1 are the RE (2, 0-1) and the RE (2, 6-7), time-frequency positions of the DMRS #2 and the DMRS #3 are an RE (2, 2-3) and an RE (2, 8-9), and time-frequency positions of the DMRS #4 and the DMRS #5 are an RE (2, 4-5) and an RE (2, 10-11).

It may be understood that a difference between the foregoing two implementations lies in that the DMRS pattern in the first implementation includes the ZP DMRS and the NZP DMRS, and may be considered as a newly defined DMRS pattern. The DMRS pattern in the second implementation usually includes the NZP DMRS, and may be considered as a conventional or an existing DMRS pattern. In this case, the network apparatus may determine the designated ZP DMRS in the conventional or existing DMRS pattern in a designated manner.

In a third implementation, the network apparatus may determine a DMRS pattern, the DMRS pattern may indicate time-frequency positions of DMRSs in the DMRS pattern, and the DMRSs in the DMRS pattern may include a time-frequency position of the DMRS whose transmit power is not zero, that is, the DMRS pattern may be considered as a conventional DMRS pattern. The network apparatus may further determine a time-frequency position of the DMRS whose transmit power is zero. The DMRS whose transmit power is zero is not a DMRS in the DMRS pattern, and the DMRS whose transmit power is zero is independently carried on a corresponding resource, for example, a resource that originally needs to be used to carry data, where a time-frequency position of the resource is the time-frequency position of the DMRS whose transmit power is zero. In other words, the network apparatus may designate, from a resource set that needs to carry the data, some resources, for example, an idle resource, to carry the DMRS whose transmit power is zero. For example, the network apparatus may determine, based on a parameter such as a network load or a frequency domain condition for obtaining the noise, that the idle resource at the corresponding time-frequency position is the DMRS whose transmit power is zero.

It may be understood that, to ensure that the terminal can accurately determine the noise corresponding to the data signal, that is, noise of the target channel, a frequency-domain span between a time-frequency position of a resource on which the DMRS whose transmit power is zero is located and a time-frequency position of a resource on which the data signal is located should not be excessively large. For example, the DMRS whose transmit power is zero and the data signal may be in a same bandwidth. The bandwidth may be a frequency domain bandwidth determined based on a channel indicator (Doppler spread, delay spread, or the like), or the bandwidth may be a frequency domain bandwidth determined based on a granularity for bundling precoding frequency domain resources, a frequency domain bundling granularity for channel estimation by a receiver, or the like. This is not limited.

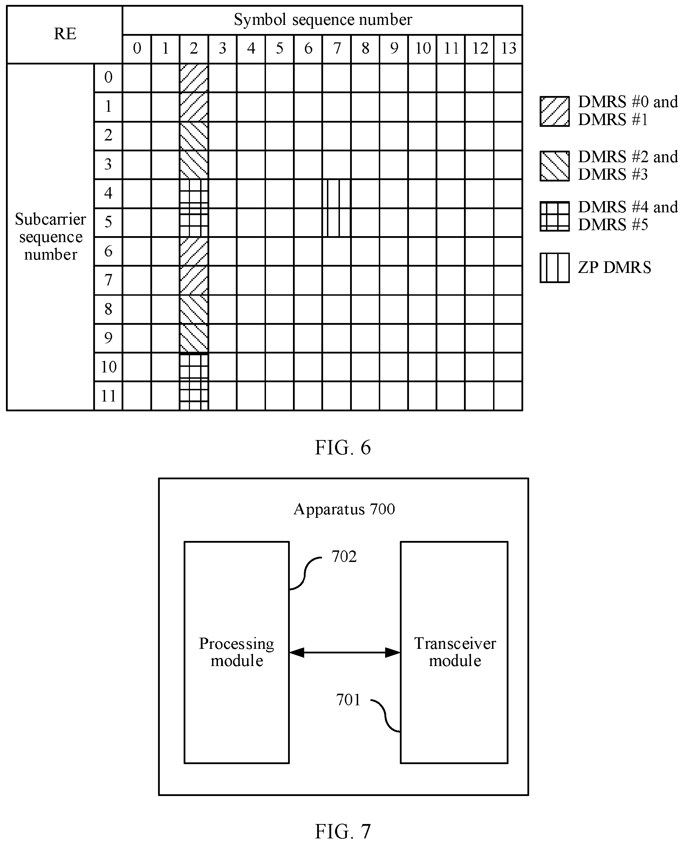

Still refer to the foregoing example. As shown in FIG. 6, the DMRSs in the DMRS pattern include the DMRS #0, the DMRS #1, the DMRS #2, the DMRS #3, the DMRS #4, and the DMRS #5, and these DMRSs are independently carried on respective corresponding resources. Time-frequency positions of the DMRS #0 and the DMRS #1 are an RE (2, 0-1) and an RE (2,6-7), time-frequency positions of the DMRS #2 and the DMRS #3 are an RE (2, 2-3) and an RE (2, 8-9), and time-frequency positions of the DMRS #4 and the DMRS #5 are an RE (2, 4-5), and an RE (2, 10-11). The network apparatus may designate a specific RE, for example, an idle RE (7, 4-5) as the ZPDMRS.

It may be understood that, in this embodiment of this application, the network apparatus may determine the DMRS pattern based on interference between channels carrying data streams and a mapping relationship between the channel and the DMRS in the DMRS pattern. Alternatively, the network apparatus may determine the DMRS pattern in any other possible manner. Specific implementation is not limited.

S302: The network apparatus sends the data signal and the plurality of DMRSs; and the terminal receives the data signal and the plurality of DMRSs.

The network apparatus may carry the data signal on a resource corresponding to the data signal, or place the data signal at a time-frequency position corresponding to the data signal, to send the data signal. In addition, the network apparatus may also carry the plurality of DMRSs on resources respectively corresponding to the plurality of DMRSs, or place the plurality of DMRSs at time-frequency positions respectively corresponding to the plurality of DMRSs, to send the plurality of DMRSs. Correspondingly, the terminal may receive the data signal at the time-frequency position corresponding to the data signal. In addition, the terminal may further receive the plurality of DMRSs at the time-frequency positions respectively corresponding to the plurality of DMRSs.

It may be understood that the network apparatus may non-simultaneously or simultaneously send the data signal and the plurality of DMRSs. Correspondingly, the terminal may non-simultaneously or simultaneously receive the data signal and the plurality of DMRSs. This is not specifically limited herein.

S303: The terminal determines, based on the DMRS whose transmit power is zero, the noise corresponding to the data signal, and determines, based on the DMRS whose transmit power is not zero, the channel corresponding to the data signal.

In a possible design solution, when the DMRS whose transmit power is zero is independently carried on the corresponding resource, because transmit power of the DMRS whose transmit power is zero is zero, the resource on which the DMRS whose transmit power is zero is located usually includes only the noise corresponding to the data signal, or in other words, the terminal usually receives only the noise on the resource on which the DMRS whose transmit power is zero is located. Therefore, the terminal may determine, based on the DMRS whose transmit power is zero, the noise corresponding to the data signal, to implement quick noise estimation.

Because a signal received by the terminal on a resource on which the DMRS whose transmit power is not zero is located includes the noise corresponding to the data signal, and also includes a channel corresponding to the DMRS whose transmit power is not zero, the terminal may further determine, based on the noise corresponding to the data signal and the DMRS whose transmit power is not zero, the channel corresponding to the data signal, for example, the plurality of channels carried on the same resource.

For example, the terminal may determine, based on the noise corresponding to the data signal and the DMRS whose transmit power is not zero, the plurality of channels, for example, including the target channel, and another channel different from the target channel in the plurality of channels, for example, all other channels, to implement comprehensive channel estimation and improve demodulation performance of the terminal. For example, for a signal received on a resource on which each DMRS whose transmit power is not zero is located, the terminal may remove the noise corresponding to the data signal from the signal, to obtain a signal with the noise removed, and determine, based on the DMRS whose transmit power is not zero and the signal with the noise removed, the channel corresponding to the DMRS whose transmit power is not zero, to implement more accurate channel estimation. For specific implementation, refer to related descriptions in TS38.211, TS38.214, R1-1706933, and the like. Details are not described again.

Still refer to the foregoing example. As shown in (a) in FIG. 4, the terminal may determine the noise based on the ZP DMRS. On this basis, the terminal may determine the channel #0 based on signals received on the RE (2, 0-1) and the RE (2, 6-7), the DMRS #0, and the noise. For example, the terminal may remove the noise from a signal received on the RE (2, 0-1), to obtain a signal 1, thereby determining the channel #0 based on the signal 1 and the DMRS #0. Similarly, the terminal may determine the channel #1 based on signals received on the RE (2, 0-1) and the RE (2, 6-7), the DMRS #1, and the noise, and so on, until the channel #5 is determined.

Alternatively, the terminal may determine, based on the noise corresponding to the data signal and the DMRS whose transmit power is not zero, the target channel and another channel that causes interference to the target channel in the plurality of channels. The interference caused by the another channel to the target channel is greater than a preset threshold, that is, the another channel may be a channel that has strong interference to the target channel in all the other channels than the target channel in the plurality of channels. In other words, if only a part of the channels are estimated, the noise cannot be determined by using an elimination method. However, when the noise is decoupled from the channel, the terminal may estimate only the part of the channels, for example, a strong interference channel that affects demodulation, without affecting signal demodulation, to further reduce a computation amount and complexity of channel estimation. For a specific implementation principle that the terminal determines the target channel and the another channel that causes interference to the target channel, refer to the foregoing related descriptions. Details are not described again.

Still refer to the foregoing example. As shown in (a) in FIG. 4, the terminal may determine the noise based on the ZP DMRS. In this case, the channel #0 is denoted as the target channel, and a channel that causes strong interference to the channel #0 is the channel #2. Therefore, the terminal may determine the channel #2 based on signals received on the RE (2, 2-3) and the RE (2, 8-9), the DMRS #2, and the noise, and the terminal does not need to determine the another channel, such as the channel #1 and the channel #3 to the channel 5.

It may be understood that which channel is the another channel that causes interference greater than the preset threshold to the target channel may be agreed upon by the terminal and the network apparatus in advance, or may be dynamically indicated by the network apparatus by using signaling. Specific implementation is not limited.

In another possible design solution, when at least a part of DMRSs whose transmit powers are not zero are carried on a same resource as the DMRS whose transmit power is zero, a signal received by the terminal on the resource includes the noise corresponding to the data signal, and also includes a channel corresponding to the DMRS whose transmit power is not zero. Therefore, the terminal determines, based on the DMRS whose transmit power is not zero, the channel corresponding to the data signal. For example,

the terminal may determine, based on the DMRS whose transmit power is not zero, the target channel and another channel different from the target channel in the plurality of channels, for example, all other channels, to implement comprehensive channel estimation and improve demodulation performance of the terminal. Specifically, the terminal may determine, based on a signal received on a resource on which each DMRS whose transmit power is not zero is located and the DMRS whose transmit power is not zero, the channel corresponding to the DMRS whose transmit power is not zero, for example, including the target channel and all other channels than the target channel in the plurality of channels. For specific implementation, refer to related descriptions in TS38.211, TS38.214, R1-1706933, and the like. Details are not described again.

On this basis, the terminal may further determine, based on the DMRS whose transmit power is zero and the channel corresponding to the data signal, the noise corresponding to the data signal. For example, for the DMRS whose transmit power is zero and the DMRS whose transmit power is not zero that are carried on the same resource, the terminal may further determine the noise corresponding to the data signal based on the channel corresponding to the DMRS whose transmit power is not zero and the DMRS whose transmit power is not zero.

Still refer to the foregoing example. As shown in (b) in FIG. 4, the ZP DMRS, the DMRS #0, and the DMRS #1 are carried on the RE (2, 0-1) and the RE (2, 6-7). The terminal may determine the channel #0 based on signals received on the RE (2, 0-1) and the RE (2, 6-7) and the DMRS #0, and determine the channel #1 based on the signals received on the RE (2, 0-1) and the RE (2, 6-7) and the DMRS #1. The terminal may determine the noise based on the channel #0, the channel #1, and the ZP DMRS. For example, the terminal may superimpose the channel #0 and the channel #1 on the DMRS #0 and the DMRS #1, to obtain an approximate received signal. The terminal may determine a difference between the signals received on the RE (2, 0-1) and the RE (2, 6-7) and the approximate received signal, where the difference is the noise. In addition, the terminal may determine the channel #2 based on signals received on the RE (2, 2-3) and the RE (2, 8-9), the DMRS #2, and the noise, and so on, until the channel #5 is determined.

It can be learned that, when a resource originally needs to carry the plurality of DMRSs whose transmit powers are not zero, DMRSs whose transmit powers are zero are defined, so that a part of DMRSs in the DMRSs whose transmit powers are not zero may be replaced with the DMRSs whose transmit powers are zero, to reduce a quantity of multiplexing layers of the DMRSs whose transmit powers are not zero on the same resource, thereby reducing a quantity of estimated channels, and further reducing the computation amount and complexity of channel estimation. In addition, because the quantity of estimated channels is reduced, error accumulation of channel estimation can be reduced, thereby improving accuracy of noise estimation.

S304: The terminal demodulates the data signal based on the noise corresponding to the data signal and the channel corresponding to the data signal.

It may be understood that the channel corresponding to the data signal includes the target channel and the another channel, for example, all the other channels than the target channel in the plurality of channels, or a channel that causes interference greater than the preset threshold to the target channel in the plurality of channels. In this case, the terminal may determine interference based on the noise corresponding to the data signal and the another channel, for example, the foregoing $R_{uu}$. In addition, the terminal may determine a channel matrix, for example, the foregoing $W_k^{\mathrm{H}}$, based on the interference and the target channel. In this way, the terminal may implement demodulation of the data signal by using the channel matrix.

In conclusion, the noise is estimated by using the DMRS whose transmit power is zero, and the channel is estimated by using the DMRS whose transmit power is not zero, so that the noise can be decoupled from the channel, to avoid a case in which a channel estimation error affects accuracy of noise estimation, and improve demodulation performance of the terminal.

With reference to the foregoing embodiment, in a possible design solution, before S302, the network apparatus may send indication information; and correspondingly, the terminal may receive the indication information. The indication information may indicate the time-frequency positions of the plurality of DMRSs, so that the terminal can subsequently accurately receive the plurality of DMRSs based on the indication information.

Specifically, with reference to the foregoing first implementation, the indication information may indicate a DMRS pattern that needs to be used by the terminal, that is, the DMRS pattern mentioned in the foregoing first implementation, or the newly defined DMRS pattern. For example, the indication information may indicate an index of the DMRS pattern or include the DMRS pattern. This is not limited. In this way, the terminal can determine, based on the indication information, the DMRS pattern that needs to be used by the terminal, to determine the time-frequency positions of the plurality of DMRSs, so that the terminal can receive the plurality of DMRSs at the corresponding time-frequency positions.

It may be understood that, because the conventional DMRS pattern usually indicates only the DMRS whose transmit power is not zero, a DMRS pattern including the DMRS whose transmit power is zero and the DMRS whose transmit power is not zero may be understood as the newly defined DMRS pattern. In other words, if the DMRS whose transmit power is zero needs to be indicated, this may be implemented by indicating the newly defined DMRS pattern; or if the DMRS whose transmit power is not zero needs to be indicated, this may be implemented by indicating the conventional DMRS pattern, so that the DMRS whose transmit power is zero and the DMRS whose transmit power is zero can be independently indicated, to implement decoupling of DMRS indication. In this way, the DMRS indication can be more flexible.

Alternatively, with reference to the second implementation, the indication information may indicate a DMRS pattern that needs to be used by the terminal, that is, the DMRS pattern mentioned in the second implementation, or the conventional DMRS pattern. For example, the indication information may further indicate an index of the DMRS pattern or include the DMRS pattern. This is not limited. On this basis, the indication information may further indicate that the designated DMRS in the DMRS pattern is the DMRS whose transmit power is zero. For example, the indication information may include an index of the designated DMRS or a name of the designated DMRS. This is not limited. In this way, the terminal can determine the time-frequency positions of the plurality of DMRSs based on the indication information, so that the terminal can receive the plurality of DMRSs at the corresponding time-frequency positions.

Optionally, in addition to the newly defined DMRS pattern, the network apparatus may also multiplex the conventional DMRS pattern, and indicates that a DMRS indicated in the conventional DMRS pattern is the DMRS whose transmit power is zero, to reduce implementation difficulty.

Alternatively, with reference to the third implementation, the indication information may indicate a DMRS pattern that needs to be used by the terminal, that is, the DMRS pattern mentioned in the third implementation, or the conventional DMRS pattern. On this basis, the indication information may further indicate the time-frequency position of the DMRS whose transmit power is zero. For example, the indication information may include an index of the resource on which the DMRS whose transmit power is zero is located, to implicitly indicate, by using the index of the resource, the time-frequency position of the DMRS whose transmit power is zero; or the indication information may directly include time-frequency position information indicating the DMRS whose transmit power is zero, to explicitly indicate the time-frequency position of the DMRS whose transmit power is zero. This is not limited. In this way, it can be implemented that the DMRS whose transmit power is not zero and the DMRS whose transmit power is zero can be independently indicated, and indication of the DMRS can be more flexible. Then, the terminal can determine the time-frequency positions of the plurality of DMRSs based on the indication information, so that the terminal can receive the plurality of DMRSs at the corresponding time-frequency positions.

Optionally, the indication information may be carried in one or more of the following: a radio resource control (radio resource control, RRC) message, a medium access control element (medium access control element, MAC-CE) message, a downlink scheduling control (downlink control information, DCI) message, or any other possible message. This is not specifically limited herein.

The foregoing describes in detail the communication method provided in embodiments of this application with reference to FIG. 3 to FIG. 6. The following describes in detail a communication apparatus configured to perform the communication method provided in embodiments of this application with reference to FIG. 7 to FIG. 8.

For example, FIG. 7 is a diagram 1 of a structure of a communication apparatus according to an embodiment of this application. As shown in FIG. 7, the communication apparatus 700 includes a transceiver module 701 and a processing module 702. For ease of description, FIG. 7 shows only main parts of the communication apparatus.

In some embodiments, the communication apparatus 700 is applicable to the communication system shown in FIG. 2, and performs a function of the foregoing terminal.

For example, the transceiver module 701 is configured to receive a data signal and a plurality of demodulation reference signals DMRSs corresponding to the data signal, where the plurality of DMRSs include a DMRS whose transmit power is zero and a DMRS whose transmit power is not zero; the processing module 702 is configured to determine, based on the DMRS whose transmit power is zero, noise corresponding to the data signal, and determine, based on the DMRS whose transmit power is not zero, a channel corresponding to the data signal; and the processing module 702 is further configured to demodulate the data signal based on the noise corresponding to the data signal and the channel corresponding to the data signal.

In a possible design solution, the DMRS whose transmit power is zero is independently carried on a corresponding resource; and the processing module 702 is further configured to determine, based on the DMRS whose transmit power is zero, the noise corresponding to the data signal, and determine, based on the noise corresponding to the data signal and the DMRS whose transmit power is not zero, the channel corresponding to the data signal.

Optionally, the channel corresponding to the data signal includes a plurality of channels carried on a same resource, and the processing module 702 is further configured to determine, based on the noise corresponding to the data signal and the DMRS whose transmit power is not zero, a target channel that is used for carrying the data signal in the plurality of channels and another channel that causes interference to the target channel in the plurality of channels, where the another channel is used for carrying another signal different from the data signal.

Further, the interference caused by the another channel to the target channel is greater than a preset threshold.

In a possible design solution, at least a part of DMRSs whose transmit powers are not zero are carried on a same resource as the DMRS whose transmit power is zero; and the processing module 702 is further configured to determine, based on the DMRS whose transmit power is not zero, the channel corresponding to the data signal, and determine, based on the DMRS whose transmit power is zero and the channel corresponding to the data signal, the noise corresponding to the data signal.

Optionally, the channel corresponding to the data signal includes a plurality of channels carried on a same resource, and the processing module 702 is further configured to determine, based on the DMRS whose transmit power is not zero, a target channel that is used for carrying the data signal in the plurality of channels and another channel different from the target channel in the plurality of channels, where the another channel is used for carrying another signal different from the data signal.

In a possible design solution, the transceiver module 701 is further configured to receive indication information before receiving the data signal and the plurality of DMRSs corresponding to the data signal, where the indication information indicates time-frequency positions of the plurality of DMRSs; and correspondingly, the transceiver module 701 is further configured to receive the plurality of DMRSs based on the indication information.

Optionally, the indication information indicates a DMRS pattern that needs to be used by the terminal, the DMRS pattern indicates time-frequency positions of DMRSs in the DMRS pattern, and the DMRSs in the DMRS pattern include the DMRS whose transmit power is zero and the DMRS whose transmit power is not zero.

Optionally, the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Optionally, the indication information indicates a DMRS pattern that needs to be used by the terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Optionally, the indication information is carried in one or more of the following: a radio resource control RRC message, a MAC-CE medium access control element message, or a downlink scheduling control DCI message.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform a function of the terminal in the communication method shown in FIG. 3.

It may be understood that the communication apparatus 700 may be a terminal, may be a chip (system) or another part or component that may be arranged in a terminal, or may be an apparatus including a terminal. This is not limited in this application. It may be understood that, if the communication apparatus 700 is a chip (system) arranged in a device, the transceiver module may be an input/output interface such as an input/output circuit or a pin of the chip (system).

In addition, for technical effects of the communication apparatus 700, refer to technical effects of the communication method shown in FIG. 3. Details are not described herein again.

In some other embodiments, the communication apparatus 700 is applicable to the communication system shown in FIG. 2, and performs a function of the foregoing network apparatus.

The processing module 702 is configured to determine a data signal and a plurality of demodulation reference signals DMRSs corresponding to the data signal, and the transceiver module 701 is configured to send the data signal and the plurality of DMRSs. The plurality of DMRSs include a DMRS whose transmit power is zero and a DMRS whose transmit power is not zero, the DMRS whose transmit power is zero is used for determining noise corresponding to the data signal, the DMRS whose transmit power is not zero is used for determining a channel corresponding to the data signal, and the noise corresponding to the data signal and the channel corresponding to the data signal are used for demodulating the data signal.

In a possible design solution, the transceiver module 701 is further configured to send indication information before sending the data signal and the plurality of DMRSs, where the indication information indicates time-frequency positions of the plurality of DMRSs.

Optionally, the indication information indicates a DMRS pattern that needs to be used by a terminal, the DMRS pattern indicates time-frequency positions of DMRSs in the DMRS pattern, and the DMRSs in the DMRS pattern include the DMRS whose transmit power is zero and the DMRS whose transmit power is not zero.

Further, the processing module 702 is further configured to determine the DMRS pattern.

Optionally, the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

Further, the processing module 702 is further configured to determine the DMRS pattern, and determine that the designated DMRS in the DMRS pattern is the DMRS whose transmit power is zero.

Optionally, the indication information indicates a DMRS pattern that needs to be used by a terminal, the DMRS pattern indicates time-frequency positions of DMRSs in the DMRS pattern, the DMRSs in the DMRS pattern include a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

Further, the processing module 702 is further configured to determine the DMRS pattern, and determine the time-frequency position of the DMRS whose transmit power is zero.

Further, the DMRS whose transmit power is zero and the data signal are in a same bandwidth.

Optionally, the indication information is carried in one or more of the following: a radio resource control RRC message, a MAC-CE medium access control element message, or a downlink scheduling control DCI message.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform a function of the network apparatus in the communication method shown in FIG. 3.

It may be understood that the communication apparatus 700 may be a network apparatus, may be a chip (system) or another part or component that may be arranged in a network apparatus, or may be an apparatus including a network apparatus. This is not limited in this application. It may be understood that, if the communication apparatus 700 is a chip (system) arranged in a device, the transceiver module may be an input/output interface such as an input/output circuit or a pin of the chip (system).

In addition, for technical effects of the communication apparatus 700, refer to technical effects of the communication method shown in FIG. 3. Details are not described herein again.

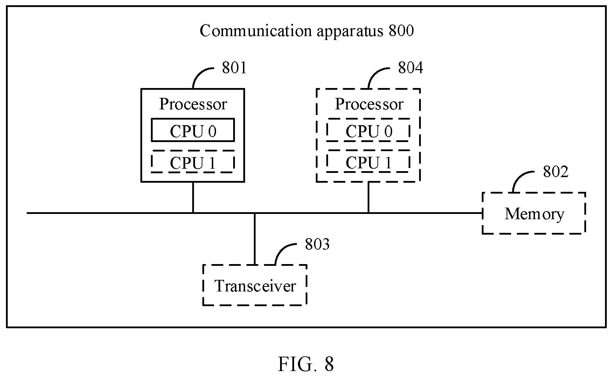

For example, FIG. 8 is a diagram 2 of a structure of a communication apparatus according to an embodiment of this application. The communication apparatus may be a terminal, or may be a chip (system) or another part or component that may be arranged in a terminal. As shown in FIG. 8, the communication apparatus 800 includes a processor 801. Optionally, the communication apparatus 800 may further include a memory 802 and/or a transceiver 803. The processor 801 is coupled to the memory 802 and the transceiver 803, for example, may be connected to the memory 802 and the transceiver 803 through a communication bus.

The following specifically describes each part of the communication apparatus 800 with reference to FIG. 8.

The processor 801 is a control center of the communication apparatus 800, and may be a processor, or may be a generic term of a plurality of processing elements. For example, the processor 801 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 801 may perform various functions of the communication apparatus 800 by running or executing a software program stored in the memory 802 and invoking data stored in the memory 802, for example, perform the communication method shown in the foregoing 3.

During specific implementation, in an embodiment, the processor 801 may include one or more CPUs, for example, a CPU 0 and a CPU 1 shown in FIG. 8.

During specific implementation, in an embodiment, the communication apparatus 800 may alternatively include a plurality of processors, such as the processor 801 and a processor 804 shown in FIG. 8. Each of the processors may be a single-core processor (single-CPU), or may be a multicore processor (multi-CPU). The processor herein may be one or more devices, circuits, and/or processing cores configured to process data (for example, computer program instructions).

The memory 802 is configured to store a software program for executing the solution of this application, and the processor 801 controls execution of the software program. For a specific implementation, refer to the foregoing method embodiment. Details are not described herein again.

Optionally, the memory 802 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer. However, this is not limited thereto. The memory 802 may be integrated with the processor 801, or may exist independently, and is coupled to the processor 801 through an interface circuit (not shown in FIG. 8) of the communication apparatus 800. This is not specifically limited in embodiments of this application.

The transceiver 803 is configured for communication with another communication apparatus. For example, the communication apparatus 800 is a terminal, and the transceiver 803 may be configured to communicate with a network apparatus or communicate with another terminal device. For another example, the communication apparatus 800 is a network apparatus, and the transceiver 803 may be configured to communicate with a terminal or communicate with another network apparatus.

Optionally, the transceiver 803 may include a receiver and a transmitter (not separately shown in FIG. 8). The receiver is configured to implement a receiving function, and the transmitter is configured to implement a sending function.

Optionally, the transceiver 803 may be integrated with the processor 801, or may exist independently, and is coupled to the processor 801 through an interface circuit (not shown in FIG. 8) of the communication apparatus 800. This is not specifically limited in embodiments of this application.

It may be understood that a structure of the communication apparatus 800 shown in FIG. 8 does not constitute a limitation on the communication apparatus. An actual communication apparatus may include more or fewer parts than those shown in the figure, or combine some parts, or have different part arrangement.

In addition, for technical effects of the communication apparatus 800, refer to technical effects of the communication method in the foregoing method embodiment. Details are not described herein again.

An embodiment of this application provides a communication system. The communication system includes one or more terminals shown in FIG. 3.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, such as a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, infrared, radio, or microwave) manner. The computer-readable storage medium may be any usable medium accessible by a computer, or a data storage device, such as a server or a data center, including one or more usable medium sets. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined by functions and internal logic thereof, and should not be construed as any limitation on implementation processes of embodiments of this application.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such implementation is beyond the scope of this application.

It may be clearly understood by a person skilled in the art that, for the purpose of convenient and brief description, for a specific working process of the foregoing system, apparatus, and unit, reference may be made to a corresponding process in the foregoing method embodiment. Details are not described herein again.

In a plurality of embodiments provided in this application, it should be understood that the disclosed system, apparatus, and method may be implemented in another manner. For example, the described apparatus embodiments are merely examples. For example, division into the units is merely logical function division and there may be another division manner during actual implementation. For example, a plurality of units or components may be combined or integrated into another system, or some features may be ignored or not performed. In addition, displayed or discussed mutual couplings or direct couplings or communication connections may be indirect couplings or communication connections through some interfaces, apparatuses, or units, and may be in electrical, mechanical, or other forms.

Units described as separate parts may or may not be physically separate, and parts displayed as units may or may not be physical units, to be specific, may be located at one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes a plurality of instructions for instructing a computer device (which may be a personal computer, a server, a network apparatus, or the like) to perform all or some of the steps of the method described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   receiving, by a terminal, a data signal and a plurality of demodulation reference signals DMRSs corresponding to the data signal, wherein the plurality of DMRSs comprise a DMRS whose transmit power is zero and a DMRS whose transmit power is not zero;
   determining, by the terminal based on the DMRS whose transmit power is zero, noise corresponding to the data signal, and determining, based on the DMRS whose transmit power is not zero, a channel corresponding to the data signal; and
   demodulating, by the terminal, the data signal based on the noise corresponding to the data signal and the channel corresponding to the data signal.

2.	The method according to claim 1, wherein the DMRS whose transmit power is zero is independently carried on a corresponding resource; and the determining, by the terminal based on the DMRS whose transmit power is zero, noise corresponding to the data signal, and determining, based on the DMRS whose transmit power is not zero, a channel corresponding to the data signal comprises:

> determining, by the terminal based on the DMRS whose transmit power is zero, the noise corresponding to the data signal; and
> determining, by the terminal based on the noise corresponding to the data signal and the DMRS whose transmit power is not zero, the channel corresponding to the data signal.

3.	The method according to claim 2, wherein the channel corresponding to the data signal comprises a plurality of channels carried on a same resource, and the determining, by the terminal based on the noise corresponding to the data signal and the DMRS whose transmit power is not zero, the channel corresponding to the data signal comprises: determining, by the terminal based on the noise corresponding to the data signal and the DMRS whose transmit power is not zero, a target channel that is used for carrying the data signal in the plurality of channels and another channel that causes interference to the target channel in the plurality of channels, wherein the another channel is used for carrying another signal different from the data signal.

4.	The method according to claim 3, wherein the interference caused by the another channel to the target channel is greater than a preset threshold.

5.	The method according to claim 1, wherein at least a part of DMRSs whose transmit powers are not zero are carried on a same resource as the DMRS whose transmit power is zero, and the determining, by the terminal based on the DMRS whose transmit power is zero, noise corresponding to the data signal, and determining, based on the DMRS whose transmit power is not zero, a channel corresponding to the data signal comprises:

> determining, by the terminal based on the DMRS whose transmit power is not zero, the channel corresponding to the data signal; and
> determining, by the terminal based on the DMRS whose transmit power is zero and the channel corresponding to the data signal, the noise corresponding to the data signal.

6.	The method according to claim 5, wherein the channel corresponding to the data signal comprises a plurality of channels carried on a same resource, and the determining, by the terminal based on the DMRS whose transmit power is not zero, the channel corresponding to the data signal comprises: determining, by the terminal based on the DMRS whose transmit power is not zero, a target channel that is used for carrying the data signal in the plurality of channels and another channel different from the target channel in the plurality of channels, wherein the another channel is used for carrying another signal different from the data signal.

7.	The method according to claim 1, wherein before the receiving, by a terminal, a data signal and a plurality of DMRSs corresponding to the data signal, the method further comprises:

> receiving, by the terminal, indication information, wherein the indication information indicates time-frequency positions of the plurality of DMRSs; and
> correspondingly, the receiving, by a terminal, a plurality of DMRSs comprises:
> receiving, by the terminal, the plurality of DMRSs based on the indication information.

8.	The method according to claim 7, wherein the indication information indicates a DMRS pattern that needs to be used by the terminal, the DMRS pattern indicates time-frequency positions of DMRSs in the DMRS pattern, and the DMRSs in the DMRS pattern comprise the DMRS whose transmit power is zero and the DMRS whose transmit power is not zero.

9.	The method according to claim 7, wherein the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

10.	The method according to claim 7, wherein the indication information indicates a DMRS pattern that needs to be used by the terminal, the DMRS pattern indicates time-frequency positions of DMRSs in the DMRS pattern, the DMRSs in the DMRS pattern comprise a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

11. The method according to any one of claims 7 to 10, wherein the indication information is carried in one or more of the following: a radio resource control RRC message, a MAC-CE medium access control element message, or a downlink scheduling control DCI message.

12. A communication method, wherein the method comprises:

determining, by a network apparatus, a data signal and a plurality of demodulation reference signals DMRSs corresponding to the data signal, wherein the plurality of DMRSs comprise a DMRS whose transmit power is zero and a DMRS whose transmit power is not zero, the DMRS whose transmit power is zero is used for determining noise corresponding to the data signal, the DMRS whose transmit power is not zero is used for determining a channel corresponding to the data signal, and the noise corresponding to the data signal and the channel corresponding to the data signal are used for demodulating the data signal; and
sending, by the network apparatus, the data signal and the plurality of DMRSs.

13. The method according to claim 12, wherein before the sending, by the network apparatus, the data signal and the plurality of DMRSs, the method further comprises:
sending, by the network apparatus, indication information, wherein the indication information indicates time-frequency positions of the plurality of DMRSs.

14. The method according to claim 13, wherein the indication information indicates a DMRS pattern that needs to be used by a terminal, the DMRS pattern indicates time-frequency positions of DMRSs in the DMRS pattern, and the DMRSs in the DMRS pattern comprise the DMRS whose transmit power is zero and the DMRS whose transmit power is not zero.

15. The method according to claim 14, wherein the method further comprises:
determining, by the network apparatus, the DMRS pattern.

16. The method according to claim 13, wherein the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

17. The method according to claim 16, wherein the method further comprises:
determining, by the network apparatus, the DMRS pattern, and determining that the designated DMRS in the DMRS pattern is the DMRS whose transmit power is zero.

18. The method according to claim 13, wherein the indication information indicates a DMRS pattern that needs to be used by a terminal, the DMRS pattern indicates time-frequency positions of DMRSs in the DMRS pattern, the DMRSs in the DMRS pattern comprise a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

19. The method according to claim 18, wherein the method further comprises:
determining, by the network apparatus, the DMRS pattern, and determining the time-frequency position of the DMRS whose transmit power is zero.

20. The method according to claim 19, wherein the DMRS whose transmit power is zero and the data signal are in a same bandwidth.

21. The method according to any one of claims 13 to 20, wherein the indication information is carried in one or more of the following: a radio resource control RRC message, a MAC-CE medium access control element message, or a downlink scheduling control DCI message.

22. A communication apparatus, wherein the apparatus comprises a transceiver module and a processing module, wherein

the transceiver module is configured to receive a data signal and a plurality of demodulation reference signals DMRSs corresponding to the data signal, wherein the plurality of DMRSs comprise a DMRS whose transmit power is zero and a DMRS whose transmit power is not zero;
the processing module is configured to determine, based on the DMRS whose transmit power is zero, noise corresponding to the data signal, and determine, based on the DMRS whose transmit power is not zero, a channel corresponding to the data signal; and
the processing module is further configured to demodulate the data signal based on the noise corresponding to the data signal and the channel corresponding to the data signal.

23. The apparatus according to claim 22, wherein the DMRS whose transmit power is zero is independently carried on a corresponding resource; and the processing module is further configured to determine, based on the DMRS whose transmit power is zero, the noise corresponding to the data signal, and determine, based on the noise corresponding to the data signal and the DMRS whose transmit power is not zero, the channel corresponding to the data signal.

24. The apparatus according to claim 23, wherein the channel corresponding to the data signal comprises a plurality of channels carried on a same resource, and the processing module is further configured to determine, based on the noise corresponding to the data signal and the DMRS whose transmit power is not zero, a target channel that is used for carrying the data signal in the plurality of channels and another channel that causes interference to the target channel in the plurality of channels, wherein the another channel is used for carrying another signal different from the data signal.

25. The apparatus according to claim 24, wherein the interference caused by the another channel to the target channel is greater than a preset threshold.

26. The apparatus according to claim 22, wherein at least a part of DMRSs whose transmit powers are not zero are carried on a same resource as the DMRS whose transmit power is zero; and the processing module is further configured to determine, based on the DMRS whose transmit power is not zero, the channel corresponding to the data signal, and determine, based on the DMRS whose transmit power is zero and the channel corresponding to the data signal, the noise corresponding to the data signal.

27. The apparatus according to claim 26, wherein the channel corresponding to the data signal comprises a plurality of channels carried on a same resource, and the processing module is further configured to determine, based on the DMRS whose transmit power is not zero, a target channel that is used for carrying the data signal in the plurality of channels and another channel different from the target channel in the plurality of channels, wherein the another channel is used for carrying another signal different from the data signal.

28. The apparatus according to claim 22, wherein the transceiver module is further configured to receive indication information before receiving the data signal and the plurality of DMRSs corresponding to the data signal, wherein the indication information indicates time-frequency positions of the plurality of DMRSs; and correspondingly, the transceiver module is further configured to receive the plurality of DMRSs based on the indication information.

29. The apparatus according to claim 28, wherein the indication information indicates a DMRS pattern that needs to be used by the terminal, the DMRS pattern indicates time-frequency positions of DMRSs in the DMRS pattern, and the DMRSs in the DMRS pattern comprise the DMRS whose transmit power is zero and the DMRS whose transmit power is not zero.

30. The apparatus according to claim 28, wherein the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

31. The apparatus according to claim 28, wherein the indication information indicates a DMRS pattern that needs to be used by the terminal, the DMRS pattern indicates time-frequency positions of DMRSs in the DMRS pattern, the DMRSs in the DMRS pattern comprise a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

32. The apparatus according to any one of claims 28 to 31, wherein the indication information is carried in one or more of the following: a radio resource control RRC message, a MAC-CE medium access control element message, or a downlink scheduling control DCI message.

33. The apparatus according to any one of claims 22 to 32, wherein the transceiver module is a transceiver, and the processing module is a processor.

34. A communication apparatus, wherein the apparatus comprises a transceiver module and a processing module, wherein

the processing module is configured to determine a data signal and a plurality of demodulation reference signals DMRSs corresponding to the data signal, wherein the plurality of DMRSs comprise a DMRS whose transmit power is zero and a DMRS whose transmit power is not zero, the DMRS whose transmit power is zero is used for determining noise corresponding to the data signal, the DMRS whose transmit power is not zero is used for determining a channel corresponding to the data signal, and the noise corresponding to the data signal and the channel corresponding to the data signal are used for demodulating the data signal; and
the transceiver module is configured to send the data signal and the plurality of DMRSs.

35. The apparatus according to claim 34, wherein the transceiver module is further configured to send indication information before sending the data signal and the plurality of DMRSs, wherein the indication information indicates time-frequency positions of the plurality of DMRSs.

36. The apparatus according to claim 35, wherein the indication information indicates a DMRS pattern that needs to be used by a terminal, the DMRS pattern indicates time-frequency positions of DMRSs in the DMRS pattern, and the DMRSs in the DMRS pattern comprise the DMRS whose transmit power is zero and the DMRS whose transmit power is not zero.

37. The apparatus according to claim 36, wherein the processing module is further configured to determine the DMRS pattern.

38. The apparatus according to claim 35, wherein the indication information indicates a DMRS pattern that needs to be used by a terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

39. The apparatus according to claim 38, wherein the processing module is further configured to determine the DMRS pattern, and determine that the designated DMRS in the DMRS pattern is the DMRS whose transmit power is zero.

40. The apparatus according to claim 35, wherein the indication information indicates a DMRS pattern that needs to be used by a terminal, the DMRS pattern indicates time-frequency positions of DMRSs in the DMRS pattern, the DMRSs in the DMRS pattern comprise a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

41. The apparatus according to claim 40, wherein the processing module is further configured to determine the DMRS pattern, and determine the time-frequency position of the DMRS whose transmit power is zero.

42. The apparatus according to claim 41, wherein the DMRS whose transmit power is zero and the data signal are in a same bandwidth.

43. The apparatus according to any one of claims 35 to 42, wherein the indication information is carried in one or more of the following: a radio resource control RRC message, a MAC-CE medium access control element message, or a downlink scheduling control DCI message.

44. The apparatus according to any one of claims 34 to 43, wherein the transceiver module is a transceiver, and the processing module is a processor.

45. A communication apparatus, wherein the apparatus comprises a processor, and the processor is configured to perform the method according to any one of claims 1 to 21.

46. A communication apparatus, wherein the apparatus comprises a processor, the processor is coupled to a memory, and the processor is configured to execute a computer program stored in the memory, to enable the apparatus to perform the method according to any one of claims 1 to 21.

47. A communication apparatus, wherein the apparatus comprises a processor and a memory, the memory is configured to store computer instructions, and when the processor executes the computer instructions, the apparatus is enabled to perform the method according to any one of claims 1 to 21.

48. A computer-readable storage medium, wherein the computer-readable storage medium comprises a computer program or instructions, and when the computer program or the instructions are run on a computer, the computer is enabled to perform the communication method according to any one of claims 1 to 21.

49. A computer program product, wherein the computer program product comprises a computer program or instructions, and when the computer program or the instructions are run on a computer, the computer is enabled to perform the communication method according to any one of claims 1 to 21.

50. A communication system, comprising a terminal configured to perform the method according to any one of claims 1 to 11, and a network apparatus configured to perform the method according to any one of claims 12 to 21.

51. A communication method, wherein the method comprises:

determining, by a network apparatus, a data signal and a plurality of demodulation reference signals DMRSs corresponding to the data signal, wherein the plurality of DMRSs comprise a DMRS whose transmit power is zero and a DMRS whose transmit power is not zero;
sending, by the network apparatus, the data signal and the plurality of DMRSs;
receiving, by a terminal, the data signal and the plurality of DMRSs;
determining, by the terminal based on the DMRS whose transmit power is zero, noise corresponding to the data signal, and determining, based on the DMRS whose transmit power is not zero, a channel corresponding to the data signal; and
demodulating, by the terminal, the data signal based on the noise corresponding to the data signal and the channel corresponding to the data signal.

52. The method according to claim 51, wherein the DMRS whose transmit power is zero is independently carried on a corresponding resource, and the determining, by the terminal based on the DMRS whose transmit power is zero, noise corresponding to the data signal, and determining, based on the DMRS whose transmit power is not zero, a channel corresponding to the data signal comprises:

determining, by the terminal based on the DMRS whose transmit power is zero, the noise corresponding to the data signal; and
determining, by the terminal based on the noise corresponding to the data signal and the DMRS whose transmit power is not zero, the channel corresponding to the data signal.

53. The method according to claim 52, wherein the channel corresponding to the data signal comprises a plurality of channels carried on a same resource, and the determining, by the terminal based on the noise corresponding to the data signal and the DMRS whose transmit power is not zero, the channel corresponding to the data signal comprises:
determining, by the terminal based on the noise corresponding to the data signal and the DMRS whose transmit power is not zero, a target channel that is used for carrying the data signal in the plurality of channels and another channel that causes interference to the target channel in the plurality of channels, wherein the another channel is used for carrying another signal different from the data signal.

54. The method according to claim 53, wherein the interference caused by the another channel to the target channel is greater than a preset threshold.

55. The method according to claim 51, wherein at least a part of DMRSs whose transmit powers are not zero are carried on a same resource as the DMRS whose transmit power is zero, and the determining, by the terminal based on the DMRS whose transmit power is zero, noise corresponding to the data signal, and determining, based on the DMRS whose transmit power is not zero, a channel corresponding to the data signal comprises:

determining, by the terminal based on the DMRS whose transmit power is not zero, the channel corresponding to the data signal; and
determining, by the terminal based on the DMRS whose transmit power is zero and the channel corresponding to the data signal, the noise corresponding to the data signal.

56. The method according to claim 55, wherein the channel corresponding to the data signal comprises a plurality of channels carried on a same resource, and the determining, by the terminal based on the DMRS whose transmit power is not zero, the channel corresponding to the data signal comprises:
determining, by the terminal based on the DMRS whose transmit power is not zero, a target channel that is used for carrying the data signal in the plurality of channels and another channel different from the target channel in the plurality of channels, wherein the another channel is used for carrying another signal different from the data signal.

57. The method according to claim 51, wherein before the sending, by the network apparatus, the data signal and the plurality of DMRSs, and the receiving, by a terminal, the data signal and the plurality of DMRSs, the method further comprises:

sending, by the network apparatus, indication information, wherein the indication information indicates time-frequency positions of the plurality of DMRSs; and
receiving, by the terminal, the indication information; and
correspondingly, the receiving, by a terminal, the plurality of DMRSs comprises:
receiving, by the terminal, the plurality of DMRSs based on the indication information.

58. The method according to claim 57, wherein the indication information indicates a DMRS pattern that needs to be used by the terminal, the DMRS pattern indicates time-frequency positions of DMRSs in the DMRS pattern, and the DMRSs in the DMRS pattern comprise the DMRS whose transmit power is zero and the DMRS whose transmit power is not zero.

59. The method according to claim 58, wherein the method further comprises:
determining, by the network apparatus, the DMRS pattern.

60. The method according to claim 57, wherein the indication information indicates a DMRS pattern that needs to be used by the terminal, the DMRS pattern indicates time-frequency positions of DMRSs in the DMRS pattern, the indication information further indicates that a designated DMRS in the DMRS pattern is the DMRS whose transmit power is zero, and a DMRS other than the designated DMRS in the DMRS pattern is the DMRS whose transmit power is not zero.

61. The method according to claim 60, wherein the method further comprises:
determining, by the network apparatus, the DMRS pattern, and determining that the designated DMRS in the DMRS pattern is the DMRS whose transmit power is zero.

62. The method according to claim 57, wherein the indication information indicates a DMRS pattern that needs to be used by the terminal, the DMRS pattern indicates time-frequency positions of DMRSs in the DMRS pattern, the DMRSs in the DMRS pattern comprise a time-frequency position of the DMRS whose transmit power is not zero, the indication information further indicates a time-frequency position of the DMRS whose transmit power is zero, the DMRS whose transmit power is zero is not a DMRS in the DMRS pattern, and the DMRS whose transmit power is zero is independently carried on a corresponding resource.

63. The method according to claim 62, wherein the method further comprises:
determining, by the network apparatus, the DMRS pattern, and determining the time-frequency position of the DMRS whose transmit power is zero.

64. The method according to claim 63, wherein the DMRS whose transmit power is zero and the data signal are in a same bandwidth.

65. The method according to any one of claims 57 to 64, wherein the indication information is carried in one or more of the following: a radio resource control RRC message, a MAC-CE medium access control element message, or a downlink scheduling control DCI message.

Terminal

Network apparatus

Terminal

FIG. 1

FIG. 2

```
┌──────────────┐                              ┌──────────────┐
│   Network    │                              │   Terminal   │
│  apparatus   │                              │              │
└──────┬───────┘                              └──────┬───────┘
       │                                             │
┌──────┴────────────────────────────────┐           │
│ S301: The network apparatus determines │           │
│ a data signal and a plurality of DMRSs │           │
│ corresponding to the data signal       │           │
└──────┬────────────────────────────────┘           │
       │                                             │
       │   S302: Data signal and plurality of DMRSs  │
       │ ──────────────────────────────────────────►│
       │                                             │
       │     ┌───────────────────────────────────────┴──┐
       │     │ S303: The terminal determines, based on    │
       │     │ a DMRS whose transmit power is zero,       │
       │     │ noise corresponding to the data signal,    │
       │     │ and determines, based on a DMRS whose      │
       │     │ transmit power is not zero, a channel      │
       │     │ corresponding to the data signal           │
       │     └───────────────────────────────────────┬──┘
       │                                             │
       │     ┌───────────────────────────────────────┴──┐
       │     │ S304: The terminal demodulates the data    │
       │     │ signal based on the noise corresponding to │
       │     │ the data signal and the channel            │
       │     │ corresponding to the data signal           │
       │     └───────────────────────────────────────┬──┘
       │                                             │
```

FIG. 3

(a)

(b)

FIG. 4

DMRS #0 and DMRS #1

DMRS #2 and DMRS #3

DMRS #4 and DMRS #5

(a)

DMRS #0, DMRS #1, DMRS #6, and DMRS #7

DMRS #2 and DMRS #3

DMRS #4 and DMRS #5

(b)

FIG. 5

| RE | | Symbol sequence number | | | | | | | | | | | | | |
|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 |
| Subcarrier sequence number | 0 | | | ▨ | | | | | | | | | | | | |
| | 1 | | | ▨ | | | | | | | | | | | | |
| | 2 | | | ▧ | | | | | | | | | | | | |
| | 3 | | | ▧ | | | | | | | | | | | | |
| | 4 | | | ▦ | | | | | ‖ | | | | | | | |
| | 5 | | | ▦ | | | | | ‖ | | | | | | | |
| | 6 | | | ▧ | | | | | | | | | | | | |
| | 7 | | | ▧ | | | | | | | | | | | | |
| | 8 | | | ▧ | | | | | | | | | | | | |
| | 9 | | | ▧ | | | | | | | | | | | | |
| | 10 | | | ▦ | | | | | | | | | | | | |
| | 11 | | | ▦ | | | | | | | | | | | | |

▨ DMRS #0 and DMRS #1

▧ DMRS #2 and DMRS #3

▦ DMRS #4 and DMRS #5

‖ ZP DMRS

FIG. 6

Apparatus 700

Processing module

702

Transceiver module

701

FIG. 7

Communication apparatus 800

801

Processor

CPU 0

CPU 1

804

Processor

CPU 0

CPU 1

802

Memory

803

Transceiver

FIG. 8

## INTERNATIONAL SEARCH REPORT

International application No.

**PCT/CN2022/116389**

| A. | CLASSIFICATION OF SUBJECT MATTER |
|---|---|

H04L27/38(2006.01)i;H04L5/00(2006.01)i;H04B7/024(2017.01)i;H04W4/00(2018.01)i

According to International Patent Classification (IPC) or to both national classification and IPC

| B. | FIELDS SEARCHED |
|---|---|

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT; CNKI; VEN; ENTXT; USTXT; WOTXT; EPTXT; 3GPP: 解调参考信号, 零, 非零, 不为零, 功率, 噪声, 干扰, 确定, 估计, 信道, DMRS, zero power, ZP, non-zero power, NZP, Noise, Interference, estimat+, Channel

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113747497 A (HUAWEI TECHNOLOGIES CO., LTD.) 03 December 2021 (2021-12-03) description, paragraphs [0118]-[0207], and figures 1-13 | 1-65 |
| A | CN 114270984 A (QUALCOMM INC.) 01 April 2022 (2022-04-01) entire document | 1-65 |
| A | US 2014140317 A1 (BROADCOM CORP.) 22 May 2014 (2014-05-22) entire document | 1-65 |
| A | ZTE. "Discussion on Downlink DMRS Design" *3GPP TSG RAN WG1 Meeting #90, R1-1712305*, 12 August 2017 (2017-08-12), entire document | 1-65 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 April 2023** | **28 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 113747497 | A | 03 December 2021 | None | | | |
| CN | 114270984 | A | 01 April 2022 | None | | | |
| US | 2014140317 | A1 | 22 May 2014 | US | 9780843 | B2 | 03 October 2017 |

Form PCT/ISA/210 (patent family annex) (July 2022)